# EUROPÄISCHE PATENTSCHRIFT

(11) **EP 3 153 839 B1**
(45) Veröffentlichungstag und Bekanntmachung des Hinweises auf die Patenterteilung: **15.06.2022**
(21) Anmeldenummer: 16192902.1
(22) Anmeldetag: 07.10.2016
(51) Int. Cl.: G01N 3/06, G01N 3/18

(54) **TEMPERIERKAMMER EINER BELASTUNGSEINRICHTUNG WIE EINER SÄULENMATERIALPRÜFMASCHINE SOWIE VERFAHREN ZUM BETRIEB EINER SOLCHEN TEMPERIERKAMMER MIT EINEM ELEMENT FÜR EINE HINTERGRUNDBELEUCHTUNG**
TEMPERATURE CHAMBER OF A LOAD DEVICE AS A PILLAR MATERIAL TESTING MACHINE AND METHOD FOR OPERATING SUCH A TEMPERATURE CHAMBER WITH AN ELEMENT FOR A BACKLIGHT
ENCEINTE THERMIQUE D'UN DISPOSITIF DE CHARGEMENT ET MACHINE DE VÉRIFICATION DE MATÉRIAU DE COLONNE ET PROCÉDÉ DE FONCTIONNEMENT D'UNE TELLE ENCEINTE THERMIQUE COMPRENANT UN ÉLÉMENT POUR UN RÉTRO-ÉCLAIRAGE

(30) Priorität: 07.10.2015 DE 102015117134; 07.10.2015 DE 202015105319 U
(43) Veröffentlichungstag der Anmeldung: 12.04.2017
(73) Patentinhaber: ZwickRoell GmbH & Co. KG, 89079 Ulm (DE)
(72) Erfinder: Dieker, Thomas, 89077 Ulm (DE)
(74) Vertreter: Cremer, Christian

(56) Entgegenhaltungen:
- DE-C1- 19 754 129
- JP-A- 2008 039 359
- Boris Plach: "Die neuen Temperierkammern Made by Zwick", , 14. August 2015 (2015-08-14), XP055347260, Gefunden im Internet: URL:https://www.testxpo.com/ [gefunden am 2017-02-17]

## Beschreibung

Die vorliegende Erfindung behandelt eine Temperierkammer, die zusammen mit einer Belastungseinrichtung, wie z. B. einer Materialprüfmaschine des Typs Säulenmaterialprüfmaschine, eine Material- und/oder Bauteil-Probe einfassen kann, es kann auch gesagt werden umschließen kann, wobei Änderungen an der Material- und/oder Bauteil-Probe unter ausgewählten thermischen und/oder atmosphärischen Umgebungsbedingungen weiterhin gemessen werden können. Die vorliegende Erfindung behandelt darüber hinaus ein günstiges Betriebsverfahren einer entsprechenden Temperierkammer, insbesondere einer Temperierkammer mit einem Element für eine Hintergrundbeleuchtung, die Teil eines optischen Messsystems ist. Die vorliegende Erfindung behandelt gemäß der jeweiligen Oberbegriffe eine gattungsbildende Temperierkammer nach Anspruch 1 sowie ein Verfahren zur Erzeugung einer Hintergrundbeleuchtung einer Probe in einer Temperierkammer nach Anspruch 13.

### Technisches Gebiet

Belastungsversuche an Material- oder Bauteil-Proben, bei denen z. B. Belastungen durch Zug, Druck und/oder Biegung auf eine Material-Probe oder eine Bauteil-Probe ausgeübt werden, sollen Auskunft über Materialeigenschaften, z. B. über die Festigkeit, über die Standzeiten, über die Lebensdauer und zu ähnlichen Fragestellungen, geben. Hierbei interessiert auch das Verhalten der Material-Probe oder der Bauteil-Probe unter besonderen klimatischen und/oder atmosphärischen Bedingungen, wie z. B. bei extrem niedrigen Temperaturen oder bei besonders hohen Temperaturen. Zur Durchführung solcher Belastungsversuche an Material-Proben und/oder Bauteil-Proben werden die Proben gerne in Klima- bzw. Temperierkammern platziert, in deren Inneren auch die Kräfte für den Belastungsversuch ausgeübt werden können.

Besonders vorteilhaft ist es, wenn die Messung bezüglich der Materialänderung anhand eines optischen Messverfahrens, d. h. insbesondere berührungslos, erhoben bzw. durchgeführt werden kann. Nutzer von Material- und/oder Bauteil-Proben-Versuchseinrichtungen wünschen häufig, dass die Messergebnisse unmittelbar nach der Messung außerhalb der Temperierkammer zur Verfügung gestellt werden können.

Aus sprachlichen Vereinfachungsgründen wird nachfolgend gelegentlich nur von Probe, nur von Bauteil-Probe oder nur von Material-Probe gesprochen, obwohl vorliegende Erfindung gleichermaßen bei einer Temperierkammer genutzt werden kann, die für Bauteilprüfungen und/oder Materialprüfungen bestimmt ist.

### Stand der Technik

Für Material- und Bauteilprüfungen gibt es unterschiedliche Prüfmaschinen. Die WO 2010/040 326 A1 (Anmelderin: Zwick GmbH & Co. KG; Prioritätstag: 08.10.2008) zeigt zwei Typen, eine Prüfmaschine mit Pinolen-Lastrahmen und eine Säulenmaterialprüfmaschine. Eine recht frühe Darstellung des Prinzips einer Säulenprüfmaschine bzw. Säulenmaterialprüfmaschine gibt die DE 2 239 554 A1 (Anmelderin: Zwick & Co. KG; Anmeldetag: 11.08.1972) wieder. Die Säulenmaterialprüfmaschine hat häufig zwei beabstandet zueinander errichtete Säulen, die zu einem Lastrahmen zusammengefasst sind und die zwischen sich einen Arbeitsraum bzw. Prüfraum aufspannen. In Abhängigkeit des Antriebsmechanismus und/oder der Messtechnik wird der Typ der Säulenmaterialprüfmaschine noch weiter unterteilt. So gibt es z. B. die in der DE 11 2009 005 323 B4 (Patentinhaberin: Messphysik Materials Testing GmbH; Prioritätstag: 17.10.2009) vorgestellte Hebelarmprüfmaschine, die einen Lastrahmen mit zwei Säulen hat, bei dem die Krafteinleitung an der oberen Traverse mittels eines Hebelarms erfolgt. Beispielhaft sei zudem die Spindelantriebsprüfmaschine (vgl. DE 10 2013 220 392 B4 der Patentinhaberin Messphysik Materials Testing GmbH; Anmeldetag 09.10.2013) erwähnt, die ebenfalls mit zwei Säulen ausgestattet in die Kategorie der Säulenmaterialprüfmaschinen einsortiert werden darf. Bei der Spindelantriebsprüfmaschine wird häufig eine Traverse innerhalb des Lastrahmens entlang der Säulen bewegt. Die Säulen übernehmen daher, je nach Ausgestaltung der Säulenmaterialprüfmaschine, unterschiedliche Aufgaben, bei bestimmten Ausgestaltungen stehen sie z. B. für eine Führung und/oder eine Kraftübertragung zur Verfügung.

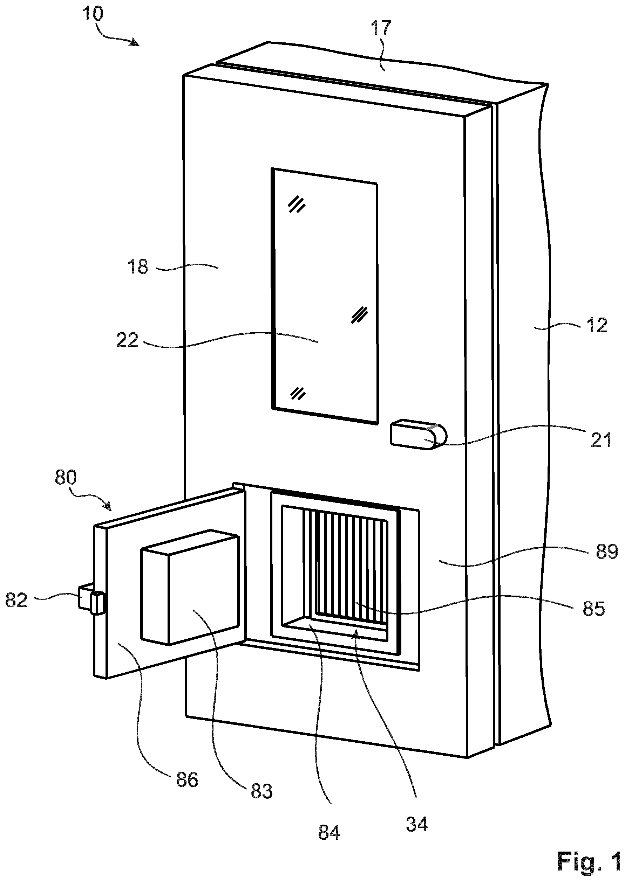

Für manche Aspekte des Schutzes vor Gefährdungen, die von Maschinen ausgehen können, kann auch die DE 101 12 200 A1 (Anmelderin: Demag Ergotech GmbH; Anmeldetag: 13.03.2001) betrachtet werden, die speziell einen Schutz vor einer Spritzgießmaschine betrifft. Im unteren Bereich des Schutzes soll es einen Lamellenvorhang geben. Wie in Figur 1 zu sehen ist, gibt es hinter einer beweglichen Schutztür zwei weitere Scheiben. Das System kann somit kurz als "Tür hinter Tür" mit einem parallel anzuordnenden Lamellenvorhang bezeichnet werden. Eine Möglichkeit, eine kleinere Tür zum Öffnen eines Ausschnitts einer größeren Öffnung eines Ofens vorzuordnen, ist in der DE 1 465 606 U (Inhaberin: Allgemeine

Die für eine Material- und/oder Bauteilprüfung eingeleitete Belastung ist, wie eingangs schon angesprochen, zudem zu messen. Eine bevorzugte Messtechnik basiert auf einer berührungslosen Messung, denn viele berührende Messungen verursachen durch ihre Berührungen an dem Messobjekt Messfehler. Folglich wird schon seit vielen Jahrzehnten an berührungslosen Messverfahren gearbeitet.

Das Prinzip der berührungslosen, optischen Messung von Material- bzw. Werkstoffproben wird daher auch schon seit vielen Jahrzehnten immer wieder beschrieben und erläutert. So beschäftigt sich z. B. die DE 37 41 429 A1 (Anmelderin: Zwick GmbH & Co.; Anmeldetag: 08.12.1987) mit der Ausführung des Fensters einer Klima- bzw. Temperierkammer, das für die berührungslose Messung Material-Proben unter einer Wechsellast-Beanspruchung, die in einer Temperierkammer angeordnet sind, genutzt wird.

Eine mögliche Form einer Temperierkammer ist in der DE 1 906 764 U1 (Gebrauchsmusterinhaber: Dr. Paul Stein; Anmeldetag: 16.10.1964) zu sehen, die in ihrer Form an eine Kühltruhe erinnert. Für den Zugang zum Kühlraum ist eine Klappe mit Fenster in einem Deckel angeordnet. Der Kühlraum ist also von oben zugänglich. Druckkräfte werden durch die geschlossene Isolierung übertragen. Zur Vermeidung von Wärmeleitbrücken werden die Durchführungen für einen Antrieb mit Isolierrohren verkleidet.

Die DE 40 21 837 A1 (Anmelderin: Zwick GmbH & Co.; Anmeldetag: 09.07.1990) beschreibt ein Probenmagazin, das in einer Temperierkammer angeordnet werden kann. Die Druckschrift berichtet zudem von einer rechtwinklig gestalteten Temperierkammer, die mit einem Fenster ausgestattet eine so gestaltete Öffnung hat, dass ein Temperaturaustausch über diese Öffnung vermieden werden kann.

Die DE 40 21 837 A1 lenkt das Augenmerk des Lesers auf ein weiteres Problem. Wird eine Beschickung des Probenhalters im Inneren der Klima- bzw. Temperierkammer erst dadurch ermöglicht, dass die Temperierkammer laufend geöffnet werden muss, können keine homogenen Temperaturverhältnisse im Inneren der Temperierkammer erreicht werden. Es droht darüber hinaus ein Beschlagen eines eventuell vorhandenen Sichtfensters, wenn eine Messung bei tieferen Temperaturen durchzuführen ist.

Ein geeignetes Messverfahren für die Messung von Querkontraktionen einer länglichen Probe beschreibt die DE 34 22 988 A1 (Anmelderin: Fraunhofer-Gesellschaft für Förderung der angewandten Forschung e. V.; Anmeldetag: 22.06.1984). Auf die Probe soll ein diffuser, homogener Lichtstrahl auftreffen, sodass vor der Lichtquelle eine Streuscheibe anzuordnen sei. Die DE 34 22 988 A1 behauptet, dass das Streulicht zu unscharfe Messergebnisse produzieren würde, wenn nicht das Licht der Lichtquelle durch einen Schlitz geführt und somit reduziert auf die längliche Probe geleitet wird. Zusätzlich zu der diffusen Scheibe sei somit eine Schlitzblende vorzusehen.

Statt mit regulärem monochromatischen Licht zu arbeiten, schlägt die JP 05 302 880 A (Anmelderin: Ishikawajima Harima Heavy Ind Co Ltd; Anmeldetag: 28.04.1992) vor, einen Laseroszillator außerhalb eines Ofens anzusiedeln, dessen Licht durch den Ofen durchtretend eine Probe bestrahlt, sodass das von der Probe reflektierte Licht mittels Laserstrahlempfänger, ebenfalls außerhalb der Ofens angesiedelt, aufgenommen werden kann.

Wie aus den zitierten Dokumenten schon ersichtlich, ist die Messvorrichtung für die optische Messung der Probe häufig so voluminös, dass sie außerhalb des Ofens, der Temperierkammer bzw. der Klimakammer anzusiedeln ist. Zudem zeigen die beispielhaft genannten Druckschriften auf, dass es ein erhebliches Know-How darstellt, funktionstüchtige optische Messverfahren zur berührungslosen Messung der Probe anbieten zu können.

In diesem Zusammenhang interessant ist z. B., dass die DE 197 54 129 C1 (Patentinhaberin: Forschungszentrum Karlsruhe GmbH; Anmeldetag: 05.12.1997) die Vorteilte des Gegenlichtmessverfahrens lobt. Die Druckschrift erläutert, wie Probleme bewältigt werden können, die durch Bewegungen des die Probe umgebenden Mediums, was z. B. zu Flimmern führen kann, vermindert werden kann. Die DE 197 54 129 C1 schlägt daher vor, eine 12 V-Kaltspiegel-Halogenlampe als Lichtquelle im Inneren einer klimatisierbaren Kammer einzusetzen, deren Licht über eine Streuscheibe und eine Strömungsumlenkung geleitet die Material-Probe bescheint. Das Licht wird anschließend über ein Sichtrohr auf ein Sichtfenster geführt, damit das Licht außerhalb der temperierbaren Kammer von einer Kamera wie einer Hochgeschwindigkeits-CCD-Kamera aufgenommen werden kann.

Diese beide Lösungsvarianten, entweder sowohl die Lichtquelle als auch die Kamera im Äußeren der temperierbaren Kammer anzuordnen (erster bekannte Lösungsansatz) oder die Lichtquelle im Inneren anzuordnen und die Kamera im Äußeren der temperierbaren Kammer zu platzieren (zweiter bekannte Lösungsansatz), fasst die DE 10 2011 055 953 B3 (Patentinhaberin: Fachhochschule Schmalkalden; Anmeldetag: 01.12.2011) zusammen und kommt anschließend zu dem Vorschlag, nur noch deswegen ein Fenster in der Wand der temperierbaren Kammer vorzuhalten, weil die Bildaufnahmeeinheit ein Bildkorrelationssystem sein soll, dessen Lichtquelle an einer Spiegelachse gespiegelt, gleichweit von der Zugachse der Probe entfernt wie die Kamera der Bildaufnahmeeinheit angeordnet werden kann.

In die gleiche technische Richtung deutet die DE 20 2013 001 062 U1 (Gebrauchsmusterinhaberin: RS-Simulatoren Prüf- und Messtechnik GmbH; Anmeldetag: 04.02.2013) und führt aus, dass die Temperaturvariationen, für die Prüfkammern genutzt werden sollen, immer größere Temperaturbereiche abdecken können sollen; beispielhaft wird ein Temperaturbereich von minus 150 °C bis plus 600 °C vorgestellt.

Ein fortschrittliches Konzept für verbesserte Temperierkammern ist in einer nachprioritär veröffentlichten Beschreibung von Boris Plach mit dem Titel "Die neuen Temperierkammern Made by Zwick" mit weiteren Erläuterungen im Internet auf der Seite "https://www.testexpo.com" unter dem Dateinamen "Zwick Plach de.pdf" abrufbar. Das Dokument nimmt Bezug auf die Ausstellung testXpo 2015, wobei zu der Datei als Erstellungsdatum der 26.10.2015 vermerkt ist.

Obwohl es in allen möglichen optischen Anwendungsbereichen eine starke Tendenz gibt, den Energieaufwand bzw. die Energieumsetzung von elektrischer Energie zu senken, dürften die, wie z. B. in der DE 10 2012 221 581 A1 (Anmelderin: NLT Technologies, Ltd.; Prioritätstag: 28.11.2011) beschriebenen, LED-Hintergrundbeleuchtungsvorrichtungen zwar inzwischen ein vergleichmäßigteres Licht aufgrund elektrischer Ansteuerungstricks erlauben, jedoch als Lichtquelle für das übliche Temperaturprüffeld von Material- und Bauteil-Proben nicht zur Verfügung stehen.

Aus diesem Grund scheint die Kombination aus LED-Lichtquellen und Kamera eher ihr Anwendungsgebiet im klassischen Kühlschrankbau zu finden, s. z. B. DE 20 2012 012 503 U1 (Gebrauchsmusterinhaberin: BSH Bosch und Siemens Hausgeräte GmbH; Anmeldetag: 10.04.2012) und DE 10 2013 211 099 A1 (Anmelderin: BSH Bosch und Siemens Hausgeräte GmbH; Anmeldetag: 14.06.2013). Dem Kühlschrankbau ist auch die JP 2008 039 359 A (Anmelderin: Matsushita Electric Ind Co Ltd; Anmeldetag: 10.08.2006) zuzuordnen, in der eine Anordnung von LEDs zur Verringerung des Energieverbrauchs durch die Beleuchtung in einem Kühlschrank gezeigt wird.

### Aufgabenstellung

Auch bei Materialprüfmaschinen gibt es den Wunsch der Nutzer, dass die Messung an klimatisierten bzw. temperierten Proben durchgeführt werden kann. Dabei soll die Messung in möglichst kurzer Zeit abgeschlossen sein, zumal die Materialprüfmaschinen häufig in der Nähe einer Produktionsstraße platziert sind, die ihre eigene Taktung vorgibt. Darüber hinaus wird häufig zwar der Wunsch von vielen Prüfmaschinenverwendern geäußert, dass, insbesondere möglichst schnell, eine temperierte Bauteil- oder Material-Probenprüfung durchführbar sein soll, jedoch die Temperatur- und/oder Probenumgebungsanpassung möglichst wenig zusätzliche Energie beanspruchen solle.

Entwickler von Temperierkammern stehen also vor dem Problem, eine Temperierkammer zu entwerfen, die idealerweise optische Messverfahren, zumindest irgendwie eine Sicht auf die jeweilige Probe erlaubt, trotzdem in kurzen Abständen einzelne Versuche durchführen lässt.

### Erfindungsbeschreibung

Die erfindungsgemäße Aufgabe wird durch eine Temperierkammer nach Anspruch 1 gelöst. Ein geeignetes Verfahren zur Erzeugung einer entsprechenden Hintergrundbeleuchtung lässt sich Anspruch 13 entnehmen. Vorteilhafte Weiterbildungen lassen sich den abhängigen Ansprüchen entnehmen.

In Bezug auf die Darlegung der Messtechniken und Messverfahren sei auf die zuvor genannten Druckschriften anstelle einer vollumfänglichen Wiederholung verwiesen. Hierdurch soll verdeutlicht werden, nach welchen Messprinzipien der Messaufbau mit einer erfindungsgemäßen Temperierkammer realisiert werden kann.

Sollen sämtliche Material-Proben nicht nur bei Umgebungstemperatur, üblicherweise Raumtemperatur in einem Temperaturbereich um 25°C herum, gemessen werden, sondern auch bei extrem niedrigen Temperaturen, z. B. bei minus 100°C oder sogar minus 150 °C, oder bei äußerst hohen Temperaturen, z. B. bei plus 250°C oder sogar bei plus 650 °C, steht der Arbeitsraum einer Materialprüfmaschine nicht komplett zur Verfügung, sondern er ist von einer Temperierkammer einzufassen. Das Innere der Temperierkammer stellt in dem Fall den eigentlichen Arbeitsraum zur Verfügung. Dieser Arbeitsraum wird häufig durch die Größe von Probenhaltern dominiert, denn die Probenhalter sind in der Regel breiter bzw. nach außen gehend im Vergleich zu den Abmessungen der Probe.

Die vorliegende Erfindung verwirklicht unter anderem den Aspekt, weder den Arbeitsraum innerhalb der Temperierkammer zu beanspruchen, noch einen Bereich außerhalb der Temperierkammer, der insbesondere der Prüfvorrichtung vorbehalten ist, zu benötigen, um ein diffuses Licht für das Innere der Temperierkammer erzeugen oder anbieten zu können. Genauso wenig beanspruchen in einer günstigen Ausgestaltung die unterschiedlichen Zugänge und Zugangsöffnungen der Temperierkammer einen ausladenden Bereich außerhalb der Temperierkammer.

Das diffuse Licht wird benötigt, um insbesondere Messverfahren unter Zuhilfenahme wenigstens einer Kamera zu realisieren, durch die eine Änderung an bzw. der Material-Probe gemessen werden kann (z. B. Kontraktion, Dehnung, Einschnürung, Längung etc.). Im Sinne der vorliegenden Erfindung wird von einer Kamera gesprochen, wenn ein Gerät vorhanden ist, das von einem Flächen- oder Raumabschnitt eine Abbildung erzeugen kann, z. B. ein Gerät mit wenigstens einem CCD-Chip. Durch eine Anordnung mit diffusem Licht und einer Kamera kann z. B. eine optische Extensometermessung, also eine berührungslose Extensometermessung, verwirklicht werden.

Die Temperierkammer ist vorteilhafterweise so gestaltet, dass sie als Teil einer Belastungseinrichtung, z. B. einer Materialprüfmaschine wie einer Säulenmaterialprüfmaschine, verwendbar ist.

Die Temperierkammer stellt eine Hülle dar, die aus Wänden gebildet ist. Ein Wandabschnitt zumindest einer Wand der Temperierkammer ist mit wenigstens einem Leuchtmittel ausgestattet. Das Leuchtmittel ist die Lichterzeugungsquelle. Mit anderen Worten, wenigstens ein Leuchtmittel ist Teil des Wandabschnitts. Das Leuchtmittel ist in der Wand integriert. Das Leuchtmittel befindet sich wenigstens zum Teil im Inneren der Wand.

Die Wand selbst stellt eine Schicht dar. Die Wand wirkt einhüllend. Vorteilhafterweise ist die Wand mehrschichtig aufgebaut. Die Wand isoliert das Innere der Temperierkammer von dem Äußeren der Temperierkammer. Mindestens eine Schicht des Wandabschnitts trennt das Innere der Temperierkammer von dem Äußeren. Die innerste Schicht der Temperierkammer trennt das Leuchtmittel von dem Inneren der Temperierkammer. Zugleich ist das Leuchtmittel Bestandteil des Wandabschnitts.

Wird das Leuchtmittel eingeschaltet, wird das Licht aus dem Leuchtmittel dank der Wand so geführt, dass eine Hintergrundbeleuchtung mit diffusem Licht erzeugt wird. Dieses Licht kann von einer Kamera des Kamerasystems aufgenommen werden.

Ferner weist die Temperierkammer wenigstens ein Fenster auf. Das Fenster befindet sich an einem anderen Ort als das Element für die Erzeugung des diffusen Lichts. In einer Wand der Temperierkammer ist ein Abschnitt dafür vorgesehen, eine Baugruppe als Element der Hintergrundbeleuchtung aufzunehmen. Wird dieser Wandabschnitt als Bezugswandabschnitt betrachtet, so gibt es einen anderen Wandabschnitt, insbesondere in einer anderen Wand der Temperierkammer, der ein Fenster aufweist. Das Fenster liegt andernorts als die Lichtquelle. Das Fenster ist dafür da, dass Licht aus der Temperierkammer austreten kann und zu einer Kamera gelangen kann. Es steht im Belieben des Nutzers der Temperierkammer, ob dieser eine zweite Kamera jenseits des Fensters anordnet oder ob er die oben angesprochene Kamera für die Probenänderungsmessung jenseits des Fensters anordnet.

Die einleitende Übersicht zu Säulenmaterialprüfmaschinen zeigt u. a. auf, dass eine Säulenmaterialprüfmaschine wenigstens zwei Säulen hat, die häufig über Traversen miteinander verbunden einen Arbeits- bzw. Prüfraum aufspannen, der zur Anordnung der Probe, wie der Material-Probe, genutzt wird.

Mit der zuvor beschriebenen Temperierkammer ist es möglich, sofern elektrische Energie zur Verfügung steht, ein Verfahren zur Erzeugung einer Hintergrundbeleuchtung für ein Messverfahren durchzuführen.

Die Temperierkammer ist dafür bestimmt, ein berührungsloses, optisches Messverfahren bei einer Materialprüfung wie einer Dimensionsänderungsmessung mit einem Kamerasystem zu ermöglichen. Damit das Kamerasystem in vielen Messverfahren ordnungsgemäß arbeiten kann, muss ein Leuchtmittel vorhanden sein, das eine entsprechende Lichtverteilung im Inneren der Temperierkammer zur Verfügung stellt.

Das oder die Leuchtmittel werden hinter wenigstens einer lichtdurchlässigen Schicht betrieben. Die Schicht ist Teil eines Wandabschnitts der Temperierkammer. Das oder die Leuchtmittel sendet/senden als Komponente(n) des Wandabschnitts in diesem Licht aus. Das noch punktuell vorhandene Licht aus einem Leuchtmittel wird mit Hilfe des Wandabschnitts, insbesondere unter Zuhilfenahme der Schicht, zu einem diffusen Licht gestreut. Messverfahren mit diffusem Licht nutzen das "weiche Licht", um möglichst kontrast- und/oder schattenarm das Messobjekt, die Probe, mit Hilfe der Kamera aufzunehmen. Das diffuse Licht dient zur Schaffung der Hintergrundhelligkeit, zu der die Probe sich dunkler abzeichnet.

Nachfolgend werden vorteilhafte Ausgestaltungen und Weiterbildungen dargelegt, die für sich gesehen, sowohl einzeln als auch in Kombination, ebenfalls erfinderische Aspekte offenbaren können.

Die Erfindung lässt sich besonders vorteilhaft bei einer Temperierkammer realisieren, die eine mehrlagige Kammer ist. Die Temperierkammer schafft eine Isolierung. Als Isolationsmaterial kann z. B. eine Luft einschließende, insbesondere weiche und somit dämmende Schicht wie ein Dämmschaum oder eine Dämmmatte verwendet werden (Glaswolle, Steinwolle, Naturwolle und Ähnliches). Der isolierte Arbeitsraum ist der Bereich, der durch die Temperierkammer umschlossen wird. Im Inneren der Temperierkammer ist ein Prüfraum vorhanden. Des Weiteren sind Öffnungen in den Fällen vorzuhalten bzw. vorhanden, in denen Teile der Materialprüfmaschine außerhalb der Temperierkammer angeordnet sind. In diesem Fall können Befestigungselemente von Spannmitteln durch die Temperierkammer hindurchgeführt werden.

Die Temperierkammer bietet Befestigungspunkte oder Befestigungsmittel, wodurch die Temperierkammer ortsfest zu einer Belastungseinrichtung als umschließende Hülle einer Probe angeordnet werden kann. Ist die Belastungseinrichtung eine Vorrichtung, von der zumindest ein Teil außerhalb der Temperierkammer angeordnet ist, weist eine Temperierkammer für eine solche Belastungseinrichtung wenigstens einen Durchgriff, in der Regel wenigstens zwei Durchgriffe auf, durch die z. B. Zugvorrichtungen für Probenhalter durchgeführt sein können.

Als Licht erzeugende Mittel in der Wand der Temperierkammer kommen Leuchtmittel in Betracht, die wie LEDs arbeiten, also auf Halbleiterbasis Licht erzeugen. Zu solchen Leuchtmitteln sind u. a. Niedervolt-LEDs, Hochvolt-LEDs und OLEDs zu zählen. Besonders vorteilhaft zeichnen sich LED-Bänder als Leuchtmittel aus. In einem Band angeordnete LEDs werden bei LED-Bändern in Serie angesteuert und erzeugen so ein Lichtband, das von sich aus schon zu einer (leicht) diffusen Lichtverteilung führt.

Die Leuchtmittel können auf einem Träger befestigt werden. Z. B. kann ein Aluminiumblech als Träger genutzt werden. Ein solcher Träger wie das Aluminiumblech lässt sich im Inneren des Wandabschnitts befestigen. Das Leuchtmittelelement ist in dieser Ausgestaltung eine Teilbaugruppe des Elements für die Hintergrundbeleuchtung.

Häufig reicht die Streuung der LEDs oder der LED-Bänder nicht aus, um von einem ausreichend diffusen Licht - in Bezug auf das angewendete Messverfahren - zu sprechen. In diesem Fall kann das Licht von einem Diffusor weitergehend gestreut werden. Ein Diffusor kann z. B. ein Aerogel, eine Milchglasscheibe oder eine Satinatglasscheibe umfassen. Auch mehrere der oben genannten Bauteile können zu einem Gesamtdiffusor, der z. B. schichtweise aufgebaut ist, zusammengefügt sein. Der Diffusor verteilt das Licht gleichmäßiger in der Temperierkammer im Vergleich zu einem Hintergrundbeleuchtungselement, das ausschließlich mit den Beleuchtungsmitteln aufgebaut ist.

Der schichtartige Aufbau des Wandabschnitts der Temperierkammer kann auch bei der Gestaltung des Diffusors fortgesetzt werden. Ein geeigneter Diffusor weist z. B. einen Schichtaufbau auf, der eine erste, vorzugsweise transparente, Glasscheibe und eine zweite, vorzugsweise streuende, Glasscheibe hat. Als streuende Scheiben kommen Glasscheiben aus solchen Materialen wie Milchglasscheiben und Satinatglasscheiben in Frage. Als Alternativen zu Glasscheiben können auch Kunststoffscheiben verwendet werden. Scheiben oder Glasscheiben mit einer hohen Oberflächenrauhigkeit sind ebenfalls interessante streuende Scheiben. Darüber hinaus kann auch ein Aerogel eingesetzt werden. In einer Ausgestaltung fassen die Glasscheiben das Aerogel ein. Dank des skizzierten Schichtaufbaus ist ein so flaches Element bildbar, dass das Element für die Hintergrundbeleuchtung einen integrierten Teil der Wand der Temperierkammer bilden kann.

Werden flache Leuchtmittel wie LEDs in dem Wandabschnitt angeordnet, ist es zudem möglich, die Leuchtmittel durch einen Luftspalt von einer Isolierschicht zu trennen. Die Isolierschicht kann z. B. durch den Schichtaufbau aus Glasscheibe und/oder Aerogel gebildet sein. Solche Leuchtmittel wie LEDs können ausgerichtet werden. Sind die Leuchtmittel ausgerichtet, können sie in eine Vorzugsrichtung abstrahlen. So können je nach Anforderung an die Verteilung des Lichts oder an den Grad des Strahldichtefaktors, insbesondere des winkelabhängigen Strahldichtefaktors, oder an den relativen Abstand zu einem lambertschen Richtungsfaktor die Leuchtmittel mit ihrer Abstrahlseite auf das Innere der Temperierkammer oder sogar von dem Inneren der Temperierkammer weg ausgerichtet sein und ggf. an Reflexionsflächen gespiegelt werden.

Wird der Schichtaufbau der gesamten Temperierkammer an verschiedenen Stellen aufgeschlüsselt, so hat die Temperierkammer Wände oder Wandabschnitte, die Isolationsmaterial wie z. B. einen Isolationsschaum umfassen, und zumindest einen Wandabschnitt, bei dem die Isolation durch eine Kombination aus einer Scheibe, wie einer Glasscheibe, und/oder einem Diffusor, wie einem Aerogel, und/oder einer Luftschicht gebildet wird. Hierbei kann die äußere Oberfläche der Temperierkammer einheitlich gestaltet sein, z. B. durch gleichartige, abschließende Bleche.

Ein Bauteil für eine erfindungsgemäße Temperierkammer kann ein Trägerblech sein. Dank der magnetisierbaren Materialeigenschaften vieler Bleche, kann eine Leuchtmittelbefestigung ausgebildet werden, die durch magnetische Kräfte gehalten wird. Das Trägerblech kann z. B. flächig an einer äußeren Schicht des Wandabschnitts anliegen. Die Magnetkräfte fördern das flache Anliegen des Trägerblechs an einer äußeren Schicht der Temperierkammer, z. B. an einer Blechhülle der Temperierkammer.

Die einzelnen Leuchtmittel der Temperierkammer, z. B. ein LED-Band zum nächsten, insbesondere unmittelbar benachbarten, LED-Band, können zueinander mit verschiedenen seitlichen Abständen angeordnet sein. Innerhalb des Wandabschnitts sind die Leuchtmittel vorteilhafterweise unterschiedlich verteilt platziert. Eine solche Anordnung fördert eine homogenisierte Lichtverteilung.

Die Temperierkammer kann mit Modulen ausgestattet sein, die zwar die gleichen Abmessungen wie das Hintergrundbeleuchtungselement aufweisen, jedoch unterschiedliche Funktionen wahrnehmen können. Der eine Wandabschnitt kann als eigenständiges, flaches, insbesondere erstes Modul ausgestaltet sein. Ein solches Modul ist dafür bestimmt, eine Öffnung in der Temperierkammer zu verschließen. Dank der identischen äußeren Abmessungen des einen Moduls zu einem weiteren Modul, das z. B. als zweites Modul bezeichnet werden kann, können die Module zueinander austauschbar sein. Das zweite Modul ist z. B. mit Leuchtmitteln ausgestattet. Diese Leuchtmittel sind aber so angeordnet, dass das Modul zur Erzeugung von Licht für eine Basissichtbeleuchtung zu nutzen ist. Die Basisbeleuchtung ermöglicht ein Beobachten der Material-Probe im Inneren durch ein Fenster. Die Basisbeleuchtung erzeugt ein Licht, insbesondere eine geringere Lichtverteilung, innerhalb der Temperierkammer. Diese Module oder Elemente können - je nach Bedarf der einen Test ausführenden Person - an Stelle des Elements für die Hintergrundbeleuchtung eine Wand der Temperierkammer komplettieren.

Durch die Temperierkammer lassen sich optische Achsen (virtuell) ziehen. Der Wandabschnitt, das Fenster und die anzuordnende Material- oder Bauteil-Probe können allesamt auf einer solchen optischen Achse angeordnet werden. Ein Fachmann versteht, dass die Anordnung auf der optischen Achse als im Wesentlichen auf dieser liegend zu bezeichnen ist. Kleine Winkelabweichungen, z. B. im Bereich von 5° zu der exakten Ausrichtung der optischen Achse, gelten im optischen Sinne, bei dem mit diffusem Licht operiert wird, noch immer als auf der optischen Achse liegend.

Die optische Achse verläuft durch die Temperierkammer. Der Verlauf der optischen Achse bzw. die Ausrichtung der optischen Achse kann in Bezug auf Wände der Temperierkammer ausgedrückt werden. Es kann ein Winkel auf die Wände der Temperierkammer gezogen werden. Die optische Achse tritt nicht in einem rechten Winkel durch eine der Wände der Temperierkammer. Der Wandabschnitt, der die Leuchtmittel hat, wird von der optischen Achse in einer Richtung durchstoßen, die weniger oder mehr als 90° zur Fläche der Wand hat. In einer alternativen Ausgestaltung ist der Winkel zwischen der optischen Achse und einer Tür der Temperierkammer zu betrachten. Ist die Tür geschlossen, mit anderen Worten, liegt sie im Riegel, kann die Oberfläche der Tür mit einer Ebene gleich gesetzt werden. Auf die Oberfläche der Tür, insbesondere auf der Innenseite, kann ein Lot gefällt werden. Die optische Achse weicht von diesem Lot ab. Der Winkel, unter dem die optische Achse aus der Ebene der Tür heraustritt, weicht von einem rechten Winkel bzw. einer Normalen auf diese Ebene ab. Die Tür spannt also eine Ebene der Temperierkammer auf, die eine Normale hat. Die optische Achse hat einen abweichenden Winkel zu dieser Normalen.

Mit anderen Worten, das Modul bzw. der Wandabschnitt für die Hintergrundbeleuchtung liegt auf einer optischen Achse. Die optische Achse ist durch den Ort geführt, an dem die Prüfung der Material-Probe durchgeführt wird. Die optische Achse geht durch das Fenster, das dafür da ist, der Kamera Einblicke auf die Material-Probe zu gewähren. Vorteilhafterweise ist das Fenster aber nicht fluchtend zur Ausrichtung bzw. Erstreckung der Wand angeordnet, sondern es ist häufig günstiger, wenn das Fenster quer, insbesondere in einem 90°-Winkel zur Richtung der optischen Achse angeordnet ist.

In einer vorteilhaften Weiterbildung hat die Temperierkammer keine strikte kubische Gestalt, sondern eine quaderförmige oder sonstige kubisch-ähnliche oder polyederartige Gestalt. Daher gibt es Wände mit unterschiedlichem Flächenmaß. Der Wandabschnitt ist Teil einer der Wände. Der Wandabschnitt sitzt vorteilhafterweise in einer Seitenwand der Temperierkammer. Besonders vorteilhaft ist es, wenn der Wandabschnitt Teil einer der größten Flächen ist. Der Wandabschnitt ist Teil einer Seitenfläche der Temperierkammer. Wird ein Bezug zu der Wand gebildet, die die Tür aufweist oder, die die Tür ist, sitzt der Wandabschnitt in vorteilhafter Weise in einer Wand, die sich an den Bereich der Temperierkammer mit der Tür anschließt.

Durch die Temperierkammer geht eine Prüfachse. Der Wandabschnitt ist idealerweise so ausgerichtet, dass er parallel zu einer Prüfachse verläuft.

Die Temperierkammer bietet die Möglichkeit, durch Verwendung einer Kamera ein optisches Messverfahren an einer Probe im Inneren der Temperierkammer durchzuführen. Das Messergebnis kann verbessert werden, wenn ein erstes Leuchtmittel, wie ein erstes LED-Band, mit einem anderen Betriebsstrom betrieben wird als ein zweites Leuchtmittel, wie ein zweites LED-Band. Das erste Leuchtmittel und das zweite Leuchtmittel können durch ihre Positionierung beschrieben werden. Die Leuchtmittel sind z. B. nebeneinander, es kann auch gesagt werden, benachbart zueinander, angeordnet. Der Wandabschnitt hat ein Zentrum und wenigstens einen Rand oder Randbereich. Von den beiden betrachteten Leuchtmitteln, z. B. dem ersten und dem zweiten LED-Band, ist das eine Leuchtmittel näher zu einem Rand verortet als das andere Leuchtmittel. Werden die Leuchtmittel mit unterschiedlichen elektrischen Betriebsströmen betrieben, kann der elektrische Strom des näher an einem Rand des Wandabschnitts angeordneten Leuchtmittels höher sein als das Leuchtmittel, das mittig in dem Wandabschnitt angeordnet ist. Leuchtmittel, die näher zur Mitte des Wandabschnitts angeordnet sind, werden mit einem niedrigeren Betriebsstrom betrieben, sofern die Lichtverteilung des diffusen Lichts zu vergleichmäßigen ist.

In anderen Worten lässt sich die Erfindung auch durch die folgenden Aspekte erläutern und vorstellen.

Die Erfindung bezieht sich u. a. auf ein Element für eine Hintergrundbeleuchtung. Die Hintergrundbeleuchtung bzw. das Element für die Hintergrundbeleuchtung sorgt für eine flächenhafte Hintergrundbeleuchtung als Teil eines optischen Messsystems. Das optische Messsystem ist dazu bestimmt, Dimensionsänderungen eines beobachteten Gegenstands, nämlich der Probe, über die Erfassung eines Hell-Dunkel-Übergangs zwischen einem hellen Hintergrund und der demgegenüber dunkleren Oberfläche des zu vermessenden Gegenstandes, d. h. der Probe, zu erfassen. Die Probe befindet sich während einer Versuchsdurchführung in der Temperierkammer. Die Temperierkammer soll die Probe, zumindest aber die diese Probe umgebende, gasförmige Atmosphäre auf einer gewünschten Temperatur halten, eventuell sogar die Probe und/oder die Atmosphäre aufheizen oder abkühlen. Handelt es sich um eine Probe, die im Rahmen einer Zugprüfung als Zugprobe genutzt wird, ist durch das optische Messsystem bzw. durch die Durchführung des Messverfahrens deren Längen- und/oder Breitenänderung während der Beanspruchung der Probe zu erfassen bzw. zu messen.

Dank der Erfindung ist es möglich, eine Licht abstrahlende Fläche des Wandabschnitts größer ausfallen zu lassen als den Bereich (in zweidimensionaler Betrachtung), der von einer Probe eingenommen werden darf (bei gegenseitiger Abbildung der Flächen aufeinander). In diesem Fall wird die Probe in jede Richtung so weit überragt, dass eine Erkennung und Auswertung des Hell-Dunkel-Übergangs ermöglicht wird.

Die vorliegende Erfindung schafft es auch, einen ausreichenden Kontrast am Hell-DunkelÜbergang zwischen Probe und Hintergrundbeleuchtung zu erzeugen, selbst in den Fällen, in denen die Oberfläche des Gegenstandes unter Umständen nicht schwarz, zumindest tiefdunkel ist. Dies ist beispielsweise bei einer metallischen Werkstoffprobe der Fall, welche von Umgebungslicht angestrahlt wird, das in die Temperierkammer, z. B. über ein weiteres Fenster, eindringt.

Dank der diffusen Verteilung des Lichts innerhalb des Wandabschnitts im Inneren der Temperierkammer ist eine sehr gute, flächige und zeitliche Homogenität der Leuchtstärke in dem gesamten Ausleuchtbereich vorhanden. Die Homogenität trägt dazu bei, dass die anhand des Hell-Dunkel-Übergangs vom Messsystem ermittelte Körpergrenze sich selbst bei (geringfügigen) Veränderungen der Leuchtstärke des Hintergrundes nicht verschiebt. Ein Messfehler bei der Bestimmung der Dimensionsänderungen tritt daher nicht ein.

Temperaturen in der Temperierkammer haben nahezu keinen unerwünschten Effekt auf das Messergebnis.

Der Wandabschnitt beeinträchtigt die eigentliche Funktion der Temperiereinrichtung nicht wesentlich. Beispielsweise erzeugt der Wandabschnitt keine hohen Wärmeeinträge durch die Leuchtmittel des Wandabschnitts, was insbesondere bei Versuchen im Tieftemperaturbetrieb unvorteilhaft wäre. Des Weiteren würde ein hoher Wärmeeintrag zu stärkerer Ausprägung von Temperaturunterschieden der Gasatmosphäre im optischen Strahlengang führen. Die einhergehenden Dichtunterschiede aufgrund von unterschiedlichem Wärmeeintrag setzt die Messgenauigkeit der optischen Messung herab. Ähnlich würde es sich auswirken, wenn der Wandabschnitt mit einer erhöhten partiellen Herabsetzung der Isolationswirkung der Wandung der Temperierkammer einherginge. Dank des durchdachten Designs des Wandabschnitts sind solche Unzulänglichkeiten - im Wesentlichen - gebannt. Der noch verbleibende (Rest-)Wärmeeintrag ist in einem Bereich, dass er unbeachtlich ist.

Die vorliegende Erfindung schafft einen weiteren, überraschenden Vorteil. Die optische Messeinrichtung kollidiert nicht mit Elementen der Haltevorrichtung der zu vermessenden Probe. Das beispielsweise notwendige Einspannen der Zugproben an beiden Enden in Probenhaltern bei einer Materialprüfung kann nicht zu einer Berührung des Wandabschnitts führen. Selbst in den Fällen, in denen der Probenhalter fast die komplette Breite des temperierten Inneren der Temperierkammer einnimmt, ist keine Gefahr für den Wandabschnitt gegeben. Eine Positionierung einer Hintergrundbeleuchtung im Inneren der Temperierkammer wird nicht mehr beansprucht.

Die Leuchtmittel zur Erzeugung einer (diffusen) Hintergrundbeleuchtung sind in mindestens einer Wand der Temperierkammer integriert. Als Leuchtmittel werden vorteilhafterweise LEDs für ein LED-Licht betrieben. Der weitere Aufbau des Wandabschnitts führt zu einer hohen Leuchtstärke bei gleichzeitiger sehr guter Homogenität der Leuchtstärke. Der spezielle Aufbau gemäß der Erfindung führt nur zu einer geringen Beeinträchtigung der Isolationswirkung der entsprechenden Wand mit dem Wandabschnitt in der Isolationswirkung der Temperierkammer.

Der Aufbau der Temperierkammer, insbesondere des Wandabschnitts, lässt sich auch wie folgt darstellen.

Der Wandabschnitt umfasst eine flächige LED-Matrix als Leuchtmittel, welche im Bereich des Äußeren der Wand der Temperierkammer positioniert sind.

In einer vorteilhaften Ausgestaltung ist ein aus mindestens zwei Scheiben bestehender Scheibensatz vorhanden. Das Volumen zwischen den Scheiben ist mit einem lichtstreuenden, zugleich thermisch isolierenden Material gefüllt.

Vorteilhafterweise ist innerhalb des Wandabschnitts ausreichend Platz, dass zwischen der LED-Matrix und dem Scheibensatz eine Luftschicht vorhanden sein kann. Die Luftschicht schafft eine thermische Trennung. Diese thermische Trennung und die Isolation durch den Scheibensatz liefern jeweils einen Beitrag zur Gesamtisolation des Wandabschnitts. Energie bzw. Wärme, die von der LED-Matrix stammt, kann kaum in den temperierten Raum des Inneren der Temperierkammer durchdringen. Wird ein Betrieb in die andere Temperaturrichtung gewählt, d. h. ein Heizbetrieb, kann die thermische Energie, die Wärme, die im Inneren herrscht, die LEDs nicht bzw. kaum aufheizen.

In einer vorteilhaften Ausführungsform besteht das bzw. bestehen die Leuchtmittel aus mehreren LED-Streifen bzw. LED-Bändern. Die LED-Bänder sind parallel zueinander auf einem dünnen und flexiblen Trägerblech, das z. B. aus Aluminium hergestellt sein kann, aufgeklebt. Auf einer Rückseite des Trägerblechs kann eine magnetische Schicht, z. B. aus dem Material "Sprox", aufgebracht sein. Ein Vorteil dieser Weiterbildung ist darin zu sehen, dass sich die komplette LED-Matrix leicht auf eine Innenseite einer Blech-Außenhaut der Temperierkammer adaptieren lässt. Die Flexibilität der Matrix, gepaart mit der flächenhaften Anziehung durch die magnetische Schicht, sorgt für eine durchgehend enge Anlage der LED-Matrix an die Außenhaut der Temperierkammer. Hierüber, d. h. über die Kopplung Blech wie Aluminiumblech und Blech-Außenhaut, ist eine effektive Abfuhr der Verlustwärme der Leuchtmittel in Richtung zur Außenhaut möglich. Die Außenhaut wird wiederum durch die daran grenzende Umgebungsluft gekühlt. Die magnetische Kopplung der LED-Matrix ermöglicht eine einfache und schnelle Installation bzw. Demontage im Falle von Nachrüstungen oder Reparaturen.

Bei einer äquidistanten Anordnung der in einer vertikalen Richtung (in Bezug auf einen Boden der Temperierkammer) liegenden LED-Bänder ist die Homogenität der Leuchtstärke (bzw. einer vom Licht durchdrungenen Fläche) in horizontaler Richtung eventuell nur von geringer Güte.

Bei einer solchen Anordnung hat der Bereich in der Mitte des Wandabschnitts eine höhere Leuchtstärke als ein Bereich in einem Rand des Wandabschnitts. Durch Variation des Abstandes der vertikal angeordneten LED-Bänder zueinander kann die Homogenität der Leuchtstärke auf der vom Licht durchdrungenen Fläche in horizontaler Richtung verbessert werden. Eine weitere Möglichkeit zur Verbesserung der Homogenität besteht aus der Ansteuerung der LED-Bänder mit unterschiedlich starken Betriebsströmen.

In einer Ausgestaltung besteht der Scheibensatz aus einer transparenten Scheibe auf einer äußeren und einer Milchglasscheibe oder satinierten Glasscheibe auf einer inneren Schicht. Das Volumen zwischen den Scheiben ist mit einem transluzenten Aerogelgranulat gefüllt. Das Aerogelgranulat bewirkt eine Transmission des von außen eingestrahlten LED-Lichtes gepaart mit einer Streuung. Würde eine Restinhomogenität verbleiben, kann diese an der inneren Schicht leicht durch die Milchglas- oder Satinatglasscheibe ausgeglichen bzw. vergleichmäßigt werden. Außerdem sorgt die Aerogelgranulat-Füllung für eine gute thermische Isolation des Scheibensatzes. Die technischen Auswirkungen solcher Aufbauten wurden schon oben angesprochen.

Mit anderen Worten, die bauliche Integration der Hintergrundbeleuchtung in einer Wand der Temperierkammer ermöglicht es, dass diese weder außerhalb noch innerhalb der Temperierkammer Bauraum in Anspruch nimmt. Wie schon oben angesprochen, Kollisionen mit Probenhaltern innerhalb der Temperierkammer oder Kollisionen mit Maschinenteilen außerhalb der Temperierkammer können sich nicht mehr ereignen.

Ein weiterer Vorteil der Integration der Leuchtmittel auf einer Innenseite einer Außenhaut der Temperierkammer ist es, dass die Hintergrundbeleuchtung bzw. das Licht der Hintergrundbeleuchtung von außen nicht sichtbar ist.

In einer Weiterbildung ist der Scheibensatz so ausgeführt, dass die Scheiben mit Hilfe einer umlaufenden, dünnen Edelstahlfolie auf Abstand gehalten werden. Die Verbindung von Gläsern und Edelstahlfolie erfolgt mit einem Hochtemperatur-Silikonkleber. Vorteil dieser Konstruktion ist es, dass durch den einfassenden, schichtweisen Aufbau zwischen der umlaufenden Edelstahlfolie thermisch bedingte Dehnungsunterschiede zwischen der inneren und äußeren Scheibe ausgeglichen werden können. Klebestellen sind nur geringen thermomechanischen Spannungen ausgesetzt. Die metallische Verbindung, insbesondere in Form der Edelstahlfolie, bewirkt zudem eine nahezu hermetische Dichtheit des Scheibensatzes. Die Gefahr eines Eindringens von Feuchtigkeit oder von möglicherweise das Aerogel verfärbenden Dämpfen ist minimiert.

Um eine hohe Temperaturbeständigkeit des Scheibensatzes zu gewährleisten, können die Scheiben zudem aus thermisch gehärtetem Glas hergestellt sein. In einer Ausgestaltung aufgrund der Wahl eines nur für einen bestimmten Temperaturbereich freigegebenen Silikonklebers kann eine maximale Einsatztemperatur der entsprechenden Temperierkammer angegeben werden. Bei Nutzung eines bestimmten Silikonklebers kann eine Dauereinsatztemperatur in der Temperierkammer von ca. 280°C eingeräumt werden. Wird ein anderer Kleber bzw. ein anderer Silikonkleber verwendet, kann auch eine höhere oder niedrigere Temperatur als maximal mögliche Einsatz- bzw. Betriebstemperatur für eine Ausgestaltung einer Temperierkammer festgelegt werden.

Je nach Einsatzgebiet einer erfindungsgemäßen Temperierkammer können solche Temperierkammern aufgrund der Materialwahlen und der Dämmung bzw. der Dämmdicke für höhere oder niedrigere Einsatz- bzw. Betriebstemperaturen ausgelegt werden.

Ein besonders interessantes Einsatzgebiet für eine erfindungsgemäße Temperierkammer liegt in einem Temperaturbereich zwischen minus 80°C und plus 250 °C. In einem Bereich von minus 40°C bis plus 150 °C werden viele Kunststoffe, Gummis und ggf. Composites getestet. Ein anderer, üblicher Temperaturbereich für Composites und Leichtmetalle ist ein Temperaturbereich bis ca. 350°C. Für Metalle müssen zum Teil höhere Temperaturen, bis zu 600 °C, als Testtemperaturen in einer Temperierkammer zur Verfügung gestellt werden. In dem letzten Fall ist besondere Rücksicht auf eine geeignete Materialauswahl für die Komponenten der Temperierkammer zu legen.

Dank eines günstig gestalteten Hintergrundbeleuchtungselements ist es möglich, eine äußerst platzsparende Temperierkammer zu realisieren.

Dank der platzsparenden Temperierkammer kann eine kompakte Materialprüfmaschine aufgebaut werden.

Rein beispielhaft sei erwähnt, dass der Betriebsstrom durch die Leuchtmittel in Abhängigkeit des Messverfahrens angepasst werden kann. In einer anderen Weiterbildung befinden sich in dem Wandabschnitt Leuchtmittel unterschiedlichen Typs an unterschiedlichen Stellen, z. B. LEDs in der Mitte und LED-Bänder am Rand des Wandabschnitts. In einer geeigneten Weiterbildung kann das Streuverhalten der Scheiben, wie z. B. von Milchglasscheiben, entlang ihrer Oberfläche in Abhängigkeit von ihren Rändern angepasst bzw. variiert sein.

Weitere Aspekte der vorliegenden Erfindung können auch wie folgt beschrieben werden.

Die Temperierkammer, die insbesondere Öffnungen für Teile einer Materialprüfmaschine wie eine Säulenmaterialprüfmaschine hat, vorzugsweise für das Durchgreifen von Probenhaltern oder ihre Antriebe, hat eine erste Öffnung. Die erste Öffnung dient zum Zugang zu einem Inneren der Temperierkammer. Die erste Öffnung kann als Zugangsöffnung der Temperierkammer bezeichnet werden. Sind Messaufbauten oder Messversuchsanpassungen vorzunehmen, so kann ein Arbeiten über die erste Öffnung erfolgen. Hierfür wird ein Verschluss wie z. B. eine Tür geöffnet. Das Innere der Temperierkammer ist frei zugänglich.

Vorteilhafterweise hat die Temperierkammer auch wenigstens ein Fenster. Das Fenster kann für unterschiedliche Aufgaben und Funktionen in der Temperierkammer vorgesehen sein. Durch das Fenster kann eine Kamera z. B. in das Innere der Temperierkammer blicken und mittels eines optischen Messverfahrens die Reaktion der Probe auf ihre Belastung vermessen. Andere Nutzer einer Messvorrichtung mit Temperierkammer wünschen aber gelegentlich auch nur ein Fenster, damit sie immer wieder in das Innere der Temperierkammer blicken können. Die Nutzer wollen sehen, was sich im Inneren der Temperierkammer ereignet. Eine weitere Funktion des Fensters kann darin liegen, dass ein Anwender zwar außerhalb der Temperierkammer steht oder sitzt, er selbst aber zumindest mit einer Hand in die Temperierkammer bedarfsweise hineingreifen möchte.

Unter normalen Betriebsumständen, d. h. im regulären Betrieb, soll die Temperierkammer überwiegend eine geschlossene Hülle um die Probe bilden. Ein türartiger Verschluss ist vorhanden, durch den die erste Öffnung verschließbar ist. Werden die Verschlüsse der Temperierkammer gezählt, so kann dieser, häufig größte, Verschluss als erster Verschluss bezeichnet werden.

Der Verschluss, es kann auch gesagt werden, die Tür der ersten Öffnung ist mehrkomponentig bzw. mehrteilig aufgebaut. Der Verschluss hat einen äußeren Rahmen. Der Rahmen ist dafür da, eine zweite Öffnung zu flankieren oder einzufassen. Der Rahmen bestimmt eine zweite Öffnung. Der Rahmen umschreibt eine zweite Öffnung. Der Rahmen markiert den Rand einer ggf. hinter dem Rahmen sich befindlichen zweiten Öffnung. In einer weiteren Ausgestaltung ist der Rahmen in einer vorgelagerten Ebene zu der zweiten Öffnung. Besonders kompakt ist die Temperierkammer, wenn der Rahmen und die zweite Öffnung ebenengleich angeordnet sind. In der kompakten Ausführungsform umrandet der Rahmen die zwischen seinen Schenkeln angeordnete zweite Öffnung. Ist der Rahmen der Träger eines aufgesetzten, zweiten, insbesondere tür- oder klappenartigen, Verschlusses, mag die Öffnung eventuell versetzt zum Rahmen zu verorten sein. Der Rahmen und die Öffnungen sind bei einem bestimmten Blickwinkel fluchtend zueinander positioniert.

Die zweite Öffnung kann vorhanden sein, obwohl die erste Öffnung verschlossen ist. Die zweite Öffnung kann als Teilgebiet oder Teilmenge der ersten Öffnung bezeichnet werden. Trotz eines Verschließens durch den, insbesondere ersten, Verschluss kann die zweite Öffnung vorhanden bzw. freigegeben sein.

In einer günstigen Ausgestaltung ist das Fenster in dem ersten Verschluss ortsfest angeordnet. Allgemein lässt sich sagen, das Fenster ist in dem ersten Verschluss vorhanden. Das Fenster ist in dem ersten Verschluss integriert. Das Fenster hat innerhalb des Rahmens einen fixierten Bezug zum Rahmen. Das Fenster bildet einen Teil des Verschlusses. Mit anderen Worten, der Verschluss weist u. a. das Fenster auf. Auch ohne ein Öffnen des Verschlusses und ein Freigeben der ersten Öffnung kann ein außen stehender Betrachter das Innere der Temperierkammer beobachten. Je nach Ausgestaltung kann das Fenster relativ beweglich zum Rahmen sein, z. B. über Scharniere am Rahmen fixiert sein. Fenster und Rahmen bilden zumindest eine Art von Koppelung oder Verbindung untereinander.

Vorteilhafterweise gibt es einen Lamellenvorhang. Der Lamellenvorhang ist in oder an der Temperierkammer vorhanden. Der Lamellenvorhang hängt vor zumindest einer der Öffnungen. Vorzugsweise wird die zweite Öffnung durch den Lamellenvorhang verhangen. Der Lamellenvorhang kann aber auch größer als die zweite Öffnung sein. Ist der Lamellenvorhang größer als die zweite Öffnung, so kann der Lamellenvorhang zumindest einen Teil, wenn nicht sogar in Gänze, die erste Öffnung abdecken. Als Materialien für den Lamellenvorhang kommen Silikonlamellenvorhänge in Frage. Wird ein durchsichtiger Silikonlamellenvorhang gewählt, hat es den Vorteil, dass ein Betrachter, zumindest in Umrissen, den Versuchsablauf im Inneren der Temperierkammer beobachten kann, obwohl der Silikonlamellenvorhang die Luft oder das Medium und somit die Temperatur im Inneren bewahrt. Ein Silikonlamellenvorhang verhängt einen Bereich der Öffnung. Will ein Anwender oder Benutzer der Temperierkammer in das Innere der Temperierkammer gelangen, schiebt er einzelne der Lamellen des Lamellenvorhangs zur Seite. Zur Seite im Sinne der vorliegenden Erfindung bezeichnet zunächst das Schieben aus dem Weg. Idealerweise sind die Lamellen von oben nach unten hängend angebracht (bei einem Blickwinkel von der Frontseite bei der regulären Einbaulage der Temperierkammer). In diesem Fall bedeutet "zur Seite schieben" tatsächlich ein Schieben nach links oder rechts. Generell sind die Lamellen schiebbar bzw. verschiebbar aufgehängt. Erfordert die Einbausituation es, dass die Lamellen waagerecht verlaufen (in Bezug auf den Boden, also parallel zum Boden), so ist mit dem Begriff "zur Seite schieben" gemeint, dass die Lamellen nach oben oder nach unten geschoben werden.

Das Arrangement mit einem Lamellenvorhang fördert das Arbeiten mit diffusem Licht.

Eine solche Anordnung einer Temperierkammer mit wenigstens zwei Öffnungen, idealerweise mit mehr als zwei Öffnungen, kann Teil einer Materialprüfmaschine sein.

Solche Temperierkammern sind besonders gut geeignet für Materialprüfmaschinen, die Materialprüfungen an Proben erlauben. Als Proben kommen Proben aus einem Kunststoff, aus einem Composite, aus einem Gummi oder aus einem Leichtmetall in Frage. Auch eine metallische Probe kann in einer solchen Temperierkammer getestet werden. Die Temperierkammer ist besonders gut dafür geeignet, Zug-, Druck-, Torsions-, Biegungs- oder Schubversuche durchzuführen.

Nachfolgend werden noch andere vorteilhafte Ausgestaltungen und Weiterbildungen dargelegt, die für sich gesehen, sowohl einzeln als auch in Kombination, ebenfalls erfinderische Aspekte offenbaren können.

Die zweite Öffnung der Temperierkammer ist besonders klein gestaltet. Vorteilhaft ist es, wenn die zweite Öffnung als Einhandöffnung ausgestaltet ist. Die zweite Öffnung ist so groß, dass eine Hand eines durchschnittlichen bzw. typischen Bedieners in das Innere der Temperierkammer hineingreifen kann. Abmessungen für eine Einhandöffnung liegen in einem Bereich von 20 cm zu 20 cm. In Gegenden, in denen der typische Benutzer schmalere Hände hat, reichen auch Öffnungen mit Abmessungen zwischen 10 cm und 15 cm.

Nicht nur der erste Verschluss ist türartig. Der zweite Verschluss kann ebenfalls türartig ausgestaltet sein. Die Temperierkammer kann einen Verschluss haben, der die zweite Öffnung verschließen kann. Der Verschluss kann an einem Scharnier befestigt sein. Vorteilhaft ist es, wenn der Verschluss schwenkbar befestigt ist. Je nach Stellung des Verschlusses kann dieser die Öffnung freigeben oder verschließen. Der zweite Verschluss ist zum Verschließen der zweiten Öffnung bestimmt und entworfen.

Insbesondere bei einer kubischen oder quadratischen Temperierkammer können die einzelnen Seiten durch die Angaben vorne, hinten, oben, unten, seitlich bezeichnet werden. Besonders vorteilhaft ist es, wenn die erste Öffnung an einer Frontseite der Temperierkammer vorhanden ist. Der Verschluss wird senkrecht gehalten. Im Betrieb ist der Verschluss vorzugsweise für eine senkrechte Anordnung vorgesehen.

Die Temperierkammer kann einen mehrschichtigen, isolierenden Aufbau haben. Die Temperierkammer ist - je nach Gestaltung - für ein Temperaturspektrum ausgelegt, das z. B. von minus 150 °C bis zu plus 250°C reichen kann. Durch die verschiedenen Schichten der Temperierkammer schafft die Temperierkammer eine gute Isolierung.

In einer vorteilhaften Weiterbildung weist die Temperierkammer eine oder auch mehrere Dichtungen auf. Ein Ort für eine Dichtung, die eine besondere Wirkung entfalten kann, ist der Bereich zwischen dem zweiten Verschluss und dem Rahmen des ersten Verschlusses. Der Rahmen, der den zweiten Verschluss umschließt, sollte eine Dichtung aufweisen, wenn die Temperierkammer besonders dicht sein soll. An der Stelle außerhalb des zweiten Verschlusses ist wenigstens eine Dichtung vorhanden. Stattdessen kann die Dichtung auch Teil des zweiten Verschlusses sein.

Die Tür, der erste Verschluss der Temperierkammer, kann in einzelne Segmente oder Abschnitte unterteilt werden. Ein Segment kann durch die zweite Öffnung gebildet sein. Die zweite Öffnung kann z. B. im Bereich einer unteren Hälfte des ersten Verschlusses angesiedelt sein. Ein solches Arrangement entspricht der natürlichen Arbeitsweise vieler Personen, die mit ihren Händen unterhalb ihres Kopfes arbeiten wollen. Mit den Augen wird durch das Fenster hindurch geblickt, das z. B. in der oberen Hälfte der Tür vorhanden sein kann.

Umfasst die Temperierkammer auch noch einen Lamellenvorhang, so kann ein Energieaustritt, landläufig auch als Energieverlust bezeichnet, weiter reduziert werden. Der Lamellenvorhang ist als weitere Barriere hinter einer Öffnung vorhanden, die von Zeit zu Zeit geöffnet wird. Mit anderen Worten, zumindest eine der Öffnungen, vorzugsweise zumindest die zweite, insbesondere kleinere, Öffnung wird zusätzlich durch einen Lamellenvorhang verhangen. Vorteilhaft ist es auch, wenn der Lamellenvorhang ein durchsichtiger Vorhang ist. Trotz des vorhandenen Vorhangs kann - in diesem Fall - von außen nach innen in die Temperierkammer geblickt werden. Nach verschiedenen Versuchen hat sich für viele Temperatur- und Anwendungsbereiche ein Silikonlamellenvorhang als geeignet erwiesen. Der Vorhang hängt hinter einer Öffnung. Bei Bedarf können dessen Lamellen zur Seite geschoben werden.

Als besonders vorteilhafter Ort für den Lamellenvorhang kann an der Temperierkammer eine Stelle einer Innenseite der Temperierkammer gewählt werden. Der Lamellenvorhang kann dort befestigt sein. Energetisch besonders vorteilhaft ist es, wenn der Lamellenvorhang unmittelbar vor einem Endbereich des Verschlusses angeordnet ist.

Grundsätzlich können die Verschlüsse der Temperierkammer in unterschiedliche Richtungen orientiert sein. Die Bedienung vereinfachend, den Nutzen der Temperierkammer steigernd kann zumindest einer der Verschlüsse, insbesondere der erste Verschluss, um eine Drehachse schwenkbar angeordnet sein. Die Schwenkachse des Verschlusses kann z. B. senkrecht in Bezug zu einer Aufbaurichtung der Temperierkammer verlaufen.

Weitere Verschlüsse der Temperierkammer können z. B. Einfassungen und Durchgriffsverengungen für Probenhalter und/oder ihre Antriebe sein.

Die Temperierkammer kann ein Fenster umfassen, das ein thermisch isoliertes Glas hat. Die Isolation wird z. B. durch ein wenigstens zwei Scheiben umfassendes Fenster hergestellt. Der Temperaturverlust bzw. der Energiefluss über das Fenster ist verringert.

Die Temperierkammer kann ein wenig größer ausgelegt sein als sie es für eine reine Probenaufnahme sein müsste. Der zusätzliche Raum kann als Zusatzvolumen der Temperierkammer bezeichnet werden. Die Temperierkammer ist mit einem Zusatzvolumen in ihrem Inneren ausgestattet. Das Zusatzvolumen ist für die Aufnahme und das Vorhalten von zusätzlichen Gegenständen gedacht. Das Zusatzvolumen reicht z. B. aus, um eine Probenzange und/oder ein Probenmagazin aufzunehmen.

Das Zusatzvolumen der Temperierkammer ist vorteilhafterweise in unmittelbarer Nähe, sozusagen unmittelbar anschließend an den Bereich der Öffnung. Befindet sich die Probenzange und/oder das Probenmagazin in dem Zusatzvolumen, befindet sich der jeweilige Gegenstand in einem Zugriffsbereich. Gibt es eine Einhandöffnung, kann ein Benutzer mit einer Hand hinter den zweiten Verschluss greifen und den unmittelbar vor der ersten Öffnung lagernden Gegenstand, z. B. die Zange, nehmen und damit die Probe bewegen.

Handelt es sich bei der Probe z. B. um ein Gummibauteil, kann das Gummibauteil möglichst stoßfrei in die Probenhalter eingespannt werden, wenn es mit der Probenzange in den Prüfbereich geführt worden ist.

Soll eine Serie von Proben aus z. B. einer Leichtmetalllegierung bei exakt den gleichen Umgebungsbedingungen getestet werden, kann nach einer Temperierzeit, zu der sämtliche, zu testende Proben in dem Probenmagazin im Inneren der Temperierkammer angeordnet sind, eine Probe nach der nächsten aus dem Probenmagazin entnommen und in die Probenhalter eingespannt werden.

Unter all diesen Testbedingungen kann der Energieabfluss aus der Temperierkammer, bei Versuchen mit negativen Temperaturen entsprechend der Energiezufluss in die Temperierkammer, niedrig gehalten werden. Ein Tester kann von nahezu homogenen Testbedingungen im Inneren der Temperierkammer ausgehen.

Ein weiterer Vorteil ist dadurch gegeben, dass lange Aufheiz- oder lange Abkühlzeiten nur einmal durchlaufen werden müssen. Anschließend befindet sich das Innere der Temperierkammer im Temperaturbereich der Test- und Versuchsserie.

Die zuvor dargestellten Kombinationen und Ausführungsbeispiele lassen sich auch in zahlreichen weiteren Verbindungen und Kombinationen betrachten. Die in ihren einzelnen Aspekten vorgestellten Besonderheiten der vorliegenden Erfindung lassen sich auch untereinander kombinieren.

### Figurenkurzbeschreibung

Die vorliegende Erfindung kann noch besser verstanden werden, wenn Bezug auf die beiliegenden Figuren genommen wird, die beispielhaft besonders vorteilhafte Ausgestaltungsmöglichkeiten darlegen, ohne die vorliegende Erfindung auf diese einzuschränken, wobei
Figur 1 eine erste Ausführungsform einer Temperierkammer in einer perspektivischen Ansicht, geschnitten durch Wände der Temperierkammer zeigt,
Figur 2 eine Frontansicht der Temperierkammer nach Figur 1 mit einem geschlossenen, zweiten Verschluss zeigt,
Figur 3 eine Schnittansicht durch die Temperierkammer nach den Figuren 1 und 2 entlang der Schnittlinie A-A und integriert in eine Säulenmaterialprüfmaschine zeigt,
Figur 4 einen Ausschnitt aus der Schnittansicht nach Figur 3 zeigt,
Figur 5 eine Schnittansicht durch die Temperierkammer nach den Figuren 1 und 2 entlang der Schnittlinie B-B und integriert in eine Säulenmaterialprüfmaschine zeigt,
Figur 6 eine zweite Ausführungsform einer Temperierkammer, ebenfalls in einer geschnitten Ansicht, in einer Säulenmaterialprüfmaschine zeigt,
Figur 7 eine dritte Ausführungsform einer Temperierkammer, diesmal ohne eine Darstellung einer Säulenmaterialprüfmaschine, zeigt,
Figur 8 einen Schnitt durch einen Wandabschnitt zeigt und
Figur 9 einen Ausschnitt aus einem Wandabschnitt zeigt.

### Figurenbeschreibung

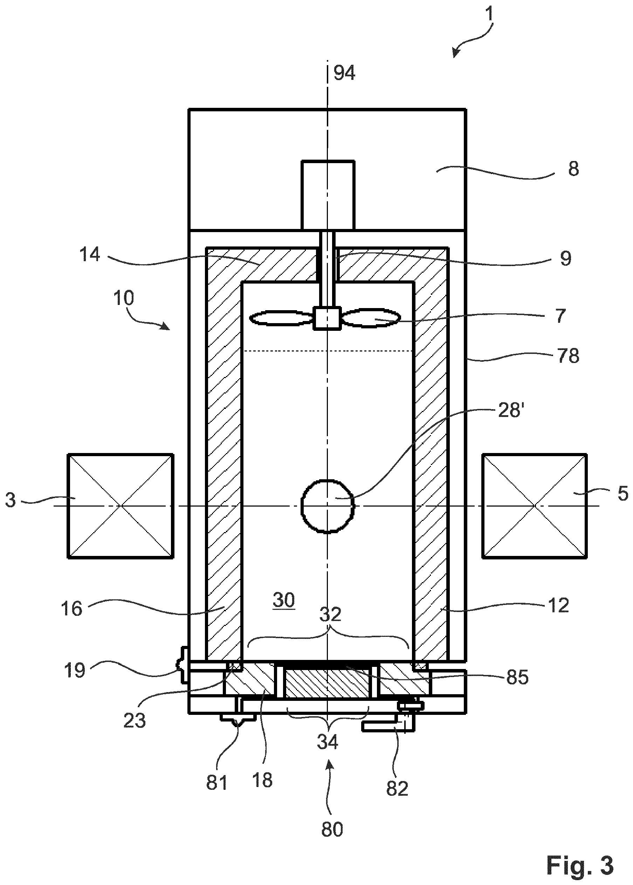

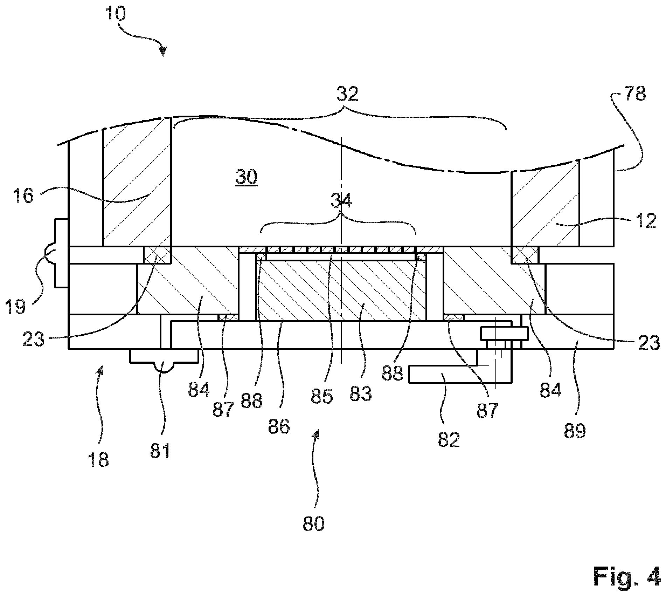

Figur 1 zeigt eine Temperierkammer 10. In Figur 1 ist besonders gut die Tür 18 der Temperierkammer 10 zu sehen. Die Tür 18 umfasst ein Fenster 22, einen Türgriff 21 und einen zweiten Verschluss 80. Der zweite Verschluss 80 ist schwenkbar an der Tür 18 befestigt und kann in einer Lage die zweite Öffnung 34 verdecken. Die Tür 18 kann durch ein Verschwenken die erste Öffnung 32 (siehe Figur 3 oder 4) verschließen oder freigeben. Die Tür 18 schließt an Wände 12 und 17 an, wenn die Tür 18 sich in der verschlossenen Stellung befindet. Trotz einer verschlossenen Tür 18 kann ein Betrachter durch das Guckfenster 22 die Ereignisse im Inneren 30 (siehe Figur 4) der Temperierkammer 10 beobachten. Die Wand 17 übernimmt die Funktion eines Dachs der Temperierkammer 10.

Die zweite Öffnung 34 wird im Inneren 30 (vgl. Figur 3 oder 4) der Temperierkammer 10 von dem Lamellenvorhang 85 begrenzt. Der Lamellenvorhang 85 stellt eine weitere thermische Barriere für Luft im Inneren 30 der Temperierkammer 10 dar. Rastet der zweite Verschluss 80, der die Erscheinungsform einer Tür hat, mithilfe des Griffs 82 und des damit verbundenen Riegels an dem Rahmen 89 der Tür 18 ein, sinkt der Isolierblock 83 in die zweite Öffnung 34 ein und füllt den Freiraum der Öffnung 34 aus. Ein Rahmen 84 des zweiten Verschlusses 80 sorgt für eine luft- und lichtdichte Abdichtung zwischen dem Isolierblock 83 des zweiten Verschlusses 80 und dem Rahmen 84. Eine Innenseite 86 des zweiten Verschlusses 80 findet eine Anlagerungsfläche in der Tür 18. Der zweite Verschluss 80 kann so eben mit der Tür 18 abschließen.

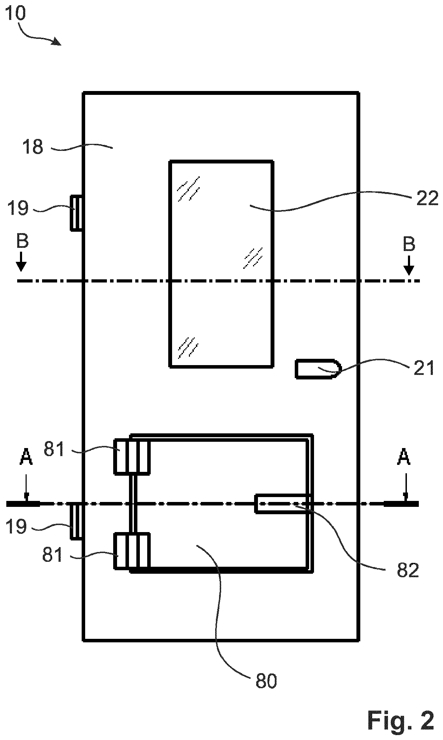

Figur 2 zeigt die Tür 18 der Temperierkammer 10 in einer Frontansicht. Von der Tür 18 treten das Fenster 22 und der Griff 21 markant hervor. Der zweite Verschluss 80 fügt sich in die Tür 18 ein. Von dem Verschluss 80 steht der Griff 82 hervor. Die Scharniere wie das Scharnier 81 verbinden die den zweiten Verschluss 80 mit dem ersten Verschluss, der Tür 18. Die Tür 18 kann wiederum um ihre Scharniere wie dem Scharnier 19 gedreht werden. Für eine stabile Aufhängung gibt es zwei Schwenkscharniere 19 der Tür 18. Genauso fördert das Vorhandensein von zwei Scharnieren 81 an dem zweiten Verschluss 80, der katzentürartigen Kleintür in der Tür 18, eine stabile, ebene Schwenkbewegung.

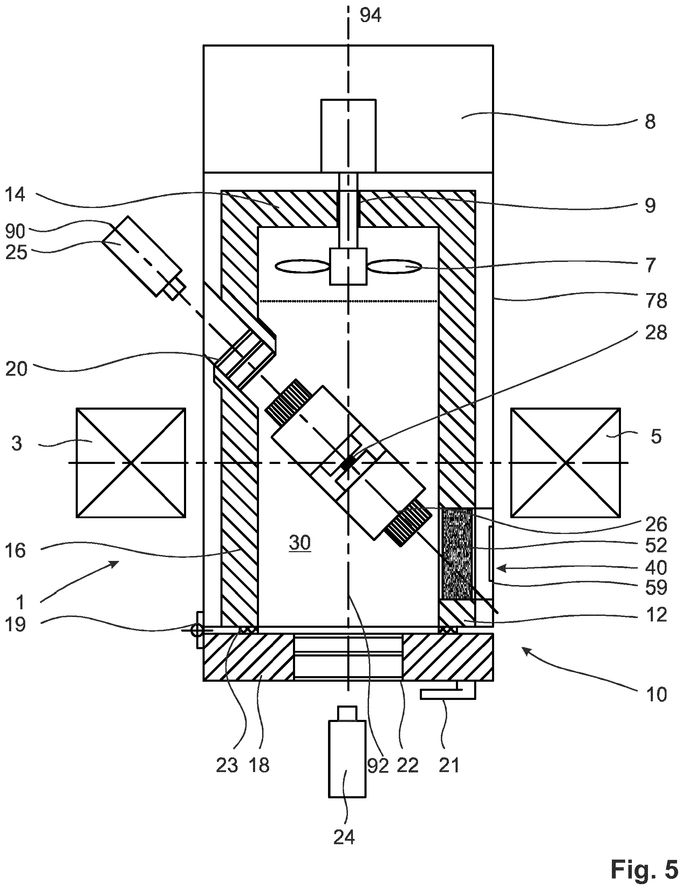

In Figur 2 sind zwei Schnitte A-A und B-B eingezeichnet, die in der Figur 3 (Schnitt A-A) und in der Figur 5 (Schnitt B-B) im Detail dargestellt sind.

Figur 3 zeigt die Materialprüfmaschine 1 anhand der Säulen 3, 5 und der Temperierkammer 10. Aus Übersichtlichkeitsgründen ist der Probenhalter 26 und die Probe 28, die in Figur 5 zu sehen sind, durch eine symbolisierte Probenanordnung 28' in Figur 3 dargestellt.

Wie in Figur 3 zu sehen ist, schließen die Wände 12, 14, 16 zusammen mit der Tür 18 den Innenraum 30 der Temperierkammer 10 reihum ein. Als Zugänge in die Temperierkammer 10 gibt es auf der einen Seite den Temperierungskanal 9, der Medien des Klimageräts 8 in das Innere 30 der Temperierkammer 10 führen kann. Auf einer anderen Seite der Temperierkammer 10 gibt es die erste Öffnung 32, die durch die Tür 18 verschlossen werden kann. Die Temperierkammer 10 ist bezüglich einer Symmetrieachse 94 in eine linke Hälfte und in eine rechte Hälfte unterteilbar. In der linken Hälfte befinden sich die Scharniere wie das Scharnier 19 für einen Anschlag der Tür 18 an der Wand 16. An der Tür 18, genauer an dem Türblatt bzw. an dem Rahmen der Tür 18, sind weitere Scharniere wie das Scharnier 81 vorhanden, durch die der zweite Verschluss 80 schwenkbeweglich einen Teil der ersten Öffnung 32 als zweite Öffnung 34 freigeben kann. Der zweite Verschluss 80 berührt im geschlossenen Zustand den Lamellenvorhang 85. Dichtungen wie die Dichtung 23 dichten die Tür 18 gegenüber den Wänden wie der Wand 16 ab.

Für eine Betätigung des zweiten Verschlusses 80 bietet dieser den Griff 82. Für eine Vergleichmäßigung der Temperatur im Inneren 30 der Temperierkammer 10 rotiert ein Lüfter 7 und verteilt die vom Klimagerät 8 erhaltene Luft. Eine Gehäuseaußenhülle 78, die eine mechanische Stabilität der Temperierkammer 10 erhöht, wird von der Tür 18 und dem zweiten Verschluss 80 durchbrochen.

In Figur 4 ist der vordere, die Tür 18 und den zweiten Verschluss 80 umfassende Teil der Temperierkammer 10 deutlicher zu sehen. So sind z. B. die Dichtungen 23, 87, 88 zu erkennen. Die Dichtung 23 dichtet zwischen Tür 18 und Wand 16, 12. Die Dichtung 87 dichtet zwischen dem zweiten Verschluss 80, der wie eine waagerecht schwenkende Klappe wirkt, und einem rahmenartigen Teil 84 für den zweiten Verschluss 80. Die Dichtung 88 dichtet zwischen dem Isolations- bzw. Isolierblock 83 des zweiten Verschlusses 80 und dem Lamellenvorhang 85. Der Isolierblock 83 ist dem zweiten Verschluss 80, der eigentlich plattenartig ist, unterlegt. Der Isolierblock 83 wölbt den zweiten Verschluss 80 nach Innen in Richtung auf den Lamellenvorhang 85. Die Dichtung 87 ist eine Dichtung zwischen der Verschlussinnenseite 86 und dem Rahmen 84 des zweiten Verschlusses 80. Die Tür 19 hat vorrangig eine rahmenartige Erscheinungsform. Der Rahmen 89 der Tür 18 fasst u. a. den zweiten Verschluss 80 ein. Zwischen dem zweiten Verschluss 80 und dem Rahmen 89 der Tür 18 kann der Griff 82 mit seinem Sperrriegel eine mechanische Verbindung bilden.

Soll die zweite Öffnung 34 einem Benutzer der Temperierkammer 10 zur Verfügung gestellt werden, dreht der zweite Verschluss 80 um die Schwenkachse, gebildet durch das Scharnier 81 des zweiten Verschlusses 80. Soll die erste Öffnung 32, die größer ist als die zweite Öffnung 34, einem Benutzer der Temperierkammer 10 einen Zugang zu dem Inneren 30 der Temperierkammer 10 gewähren, wird die gesamte Tür, ggf. inklusive des zweiten Verschlusses 80, um das Scharnier 19 herumbewegt.

Tür 18, zweiter, ebenfalls türartiger Verschluss 80 und äußere Gehäusehülle bzw. Gehäuseaußenhülle 78 können aus identischen Oberflächenmaterialen als Abschlussmaterialien gefertigt sein, z. B. aus einem Blech oder einem Edelstahl. Die aus Isolierungen bestehenden Wände wie die Wand 12 oder die Wand 16 werden durch die Gehäuseaußenhülle 78 vor Beschädigungen geschützt.

In Figur 5 ist ebenfalls die Materialprüfmaschine 1 in vereinfachter, schematischer Darstellung zu sehen. Die Materialprüfmaschine 1 ist in einer Ansicht von oben, nach einem waagerechten Schnitt durch die Säulen 3, 5 und durch die Temperierkammer 10 dargestellt (Schnitt B-B nach Figur 2). Die Temperierkammer 10 ist seitlich von der ersten Säule 3 und von der zweiten Säule 5 eingefasst. Die beiden Säulen 3, 5 schließen die Temperierkammer 10 in einer Position bzw. Ortslage der Temperierkammer 10 ein. Die Temperierkammer 10 ist länger als die beiden Säulen 3 und 5. Die Temperierkammer 10 ist quaderartig bzw. kubisch. Die Form der Temperierkammer 10, betrachtet von oben oder von unten, kann auch als rechteckig bezeichnet werden. Die Temperierkammer 10 baut tiefer als die Säulen 3, 5 breit sind.

Auch in der Schnittansicht nach Figur 5 zeigt die Temperierkammer 10 den Lüfter 7, dessen Welle (ohne Bezugszeichen) in dem Temperierungskanal 9 geführt ist. Durch den Temperierungskanal 9 können thermisch aufbereitete Medien, z. B. mit Feuchtigkeit zur Herstellung eines bestimmten Taupunkts ausgestattet, eingeleitet werden. Hinter der Temperierkammer 10 ist das Klimagerät 8, das ein Heizgerät umfasst, angeordnet. Temperierkammer 10 und Klimagerät 8 sitzen auf einem (in dem Schnitt von oben nicht zu sehenden) Wagen, durch den die Temperierkammer 10 und das Klimagerät 8 nach hinten (in der dargestellten Ansicht also nach oben) weggefahren werden können.

In der Figur 5 sind von der Temperierkammer 10 die erste Wand 12, die zweite Wand 14 und die dritte Wand 16 zu sehen. Die drei Wände 12, 14, 16 formen eine miteinander verbundene, eine Schale bildende Struktur, die von der vierten Wand 18, die eine Tür ist, abgeschlossen ist. Die Tür 18 ist über Dichtungen wie die Dichtung 23 an den Wänden 12, 16 angeschlossen. In einer der Wände, genauer in der Wand 16, ist ein Fenster 20 eingearbeitet. Ein weiteres Fenster 22, das als Guckfenster dient, ist in der vierten Wand, der Tür 18, vorhanden. Durch Kameras 24, 25 kann das Innere 30 der Temperierkammer 10 betrachtet werden. Zudem kann über Kameras 24, 25 berührungslos die Probe 28 gemessen werden. Die Probe 28 befindet sich im Probenhalter 26. Probe 28 und Probenhalter 26 befinden sich im Inneren 30, das einen Innenraum oder einen Arbeitsraum darstellt, der Temperierkammer 10. Ein Wandabschnitt 40 ist andernorts, d. h. in einer anderen Wand als der dritten Wand 16, nämlich in der ersten Wand 12, vorhanden.

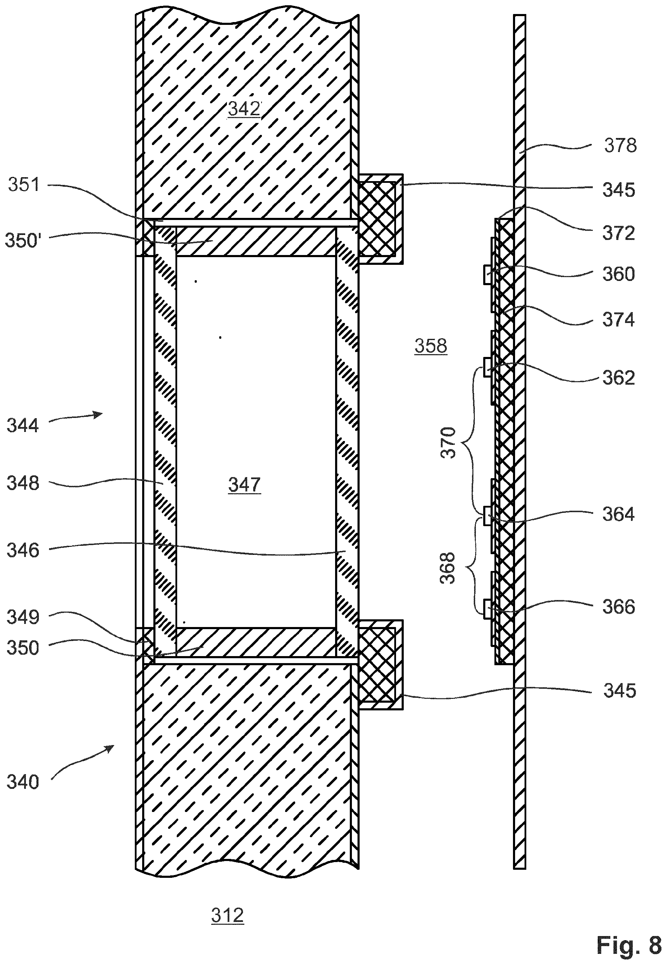

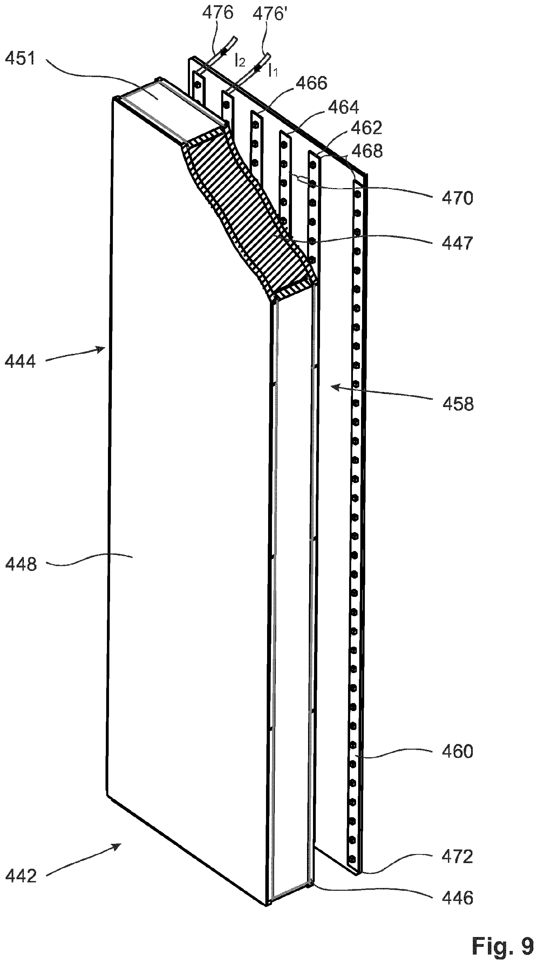

Teil des Wandabschnitts 40 ist der Diffusor 52. Die Wand 12 zusammen mit ihrer Gehäuseaußenhülle 78 ist so dick, dass im Bereich des Wandabschnitts 40 sowohl der Diffusor 52 als auch Licht erzeugende Elemente wie Beleuchtungsmittel (siehe insbesondere Figuren 8 und 9) in der Wand 12 integriert angeordnet werden können. Der Diffusor 52 ist schichtartig aufgebaut. Die einzelnen Schichten des Diffusors 52 sind in die Wand 12 eingeformt. Mit anderen Worten, hinter dem Diffusor 52, in der Nähe der Gehäuseaußenhülle 78 ist das Leuchtmodul 59. Das Leuchtmodul 59 ist thermisch mit der Gehäuseaußenhülle 78 großflächig gekoppelt.

Durch die Anordnung aus Temperierkammer 10 und optischer Messeinrichtung, umfassend die Kamera 25, das Fenster 20 und den Wandabschnitt 40, gehen verschiedene Achsen. Die Kamera 25, das Fenster 20, die Probe 28 und der Licht erzeugende Wandabschnitt 40 sitzen auf einer optischen Achse 90. Das Fenster 20 sitzt im Wesentlichen in einem 90°-Winkel zu der optischen Achse 90. Das Fenster 20 ist angewinkelt im Vergleich zur Erstreckungsrichtung der Wand 16 angeordnet. Von der Kamera 24 geht eine weitere optische Achse 92 aus, die ebenfalls auf die Probe 28, jedoch unter einem andern Blickwinkel, geführt ist. Die zweite optische Achse 92 und die symmetrische Achse 94 der Temperierkammer 10 fallen zusammen. Rein streng betrachtet, handelt es sich bei der symmetrischen Achse 94 nicht um eine einhundert prozentige Symmetrieachse. Sowohl das Fenster 20 als auch der Wandabschnitt 40, genauso weniger in das Auge springende Bauteile wie der Türgriff 21 und das Scharnier 19 verletzen die Symmetrie der Temperierkammer 10. Globaler oder mit größerem Abstand betrachtet, wirkt die Temperierkammer 10 aber recht symmetrisch. Eine symmetrische Temperierkammer 10 fördert die optischen Verhältnisse im Inneren 30 der Temperierkammer 10.

Mit dem diffusen Licht, das aus dem Diffusor 52 austritt und im Inneren 30 der Temperierkammer 10 auf die Probe 28 fällt, kann anhand eines Hell-Dunkel-Übergangs zwischen Umgebungshelligkeit und Dunkelheit der Probe 28 eine berührungslose Extensometermessung der Probe 28 durch die Kamera 25 durchgeführt werden.

Eine solche Anordnung einer beweglichen Temperierkammer 10 erlaubt die Durchführung von Versuchen mit Proben wie der Probe 28 einmal in einer temperierten und ggf. klimatisierten Umgebung, das andere Mal unmittelbar bei Raumtemperatur außerhalb der Temperierkammer 10. Die beiden Positionen der Temperierkammer 10 werden durch ein Vorwärts- und Rückwärtsfahren der Temperierkammer 10, jeweils bei geöffneter Tür 18, und ggf. des Klimageräts 8 ermöglicht.

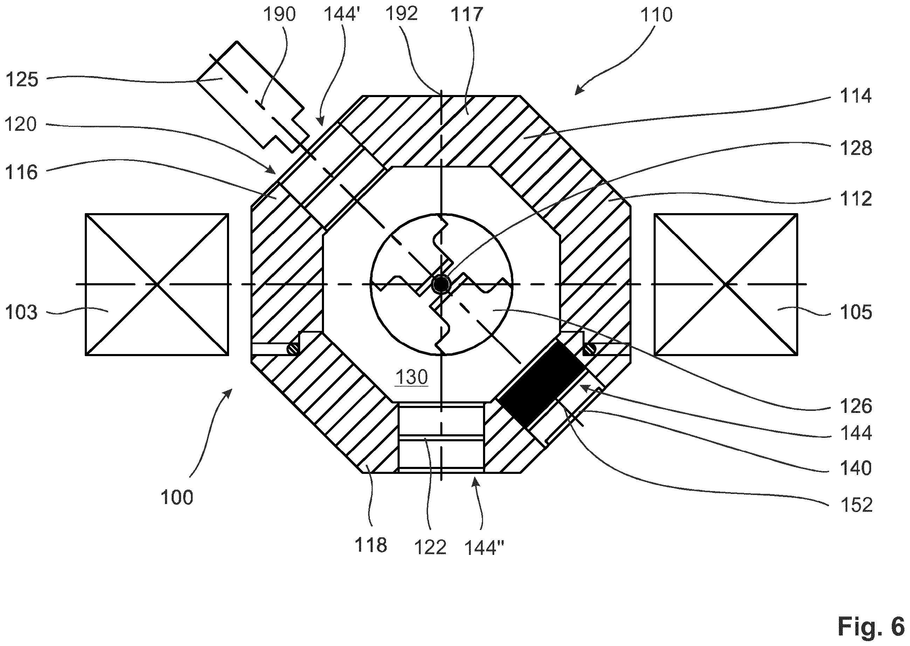

Eine weitere Ausgestaltung einer Temperierkammer 110, ähnlich zu der Temperierkammer 10, als Teil der Materialprüfmaschine 100 wird in Figur 6 gezeigt. Die Temperierkammer 110 hat eine etwas andere geometrische Gestalt als die Temperierkammer 10 (vgl. Figur 1). Die Materialprüfmaschine 100 umfasst eine erste Säule 103, eine zweite Säule 105 und die zwischen den Säulen 103, 105 angeordnete Temperierkammer 110. Aufgrund der oktaederartigen Form der Temperierkammer 110 erstreckt sich die Temperierkammer 110 über eine geringere Tiefe als die Temperierkammer 10, wenn die Länge in einem Vergleich zu den Säulen 103, 105 (vgl. Figur 6) bzw. den Säulen 3, 5 (vgl. Figur 5) gesetzt wird. Die Temperierkammer 110 hat eine erste Wand 112, eine zweite Wand 114, eine dritte Wand 116 und eine vierte Wand 118. Die vierte Wand 118 stellt zugleich die Tür der Temperierkammer 110 dar. Darüber hinaus hat die Temperierkammer 110 weitere Wände wie die Wand 117. Die Tür 118 ist eine Elemententür, bei der die einzelnen Elemente mehrfach umgewinkelt zueinander verlaufen bzw. ausgerichtet sind. Die Tür 118 bildet die besondere Form der Temperierkammer 110 fort. Die Tür 118 schafft den verschließenden Abschluss der Temperierkammer 110. Die Tür 118 bietet Platz für ein Fenster 122. In dem ortsfesten Teil der Temperierkammer 110, in der dritten Wand 116, befindet sich ein weiteres Fenster 120. Die Kamera 125 ist auf das erste Fenster 120 ausgerichtet.

Im Inneren 130 der Temperierkammer 110 ist ein geteilter Probenhalter 126 angeordnet, der eine Probe 128 hält.

Der Wandabschnitt 140 ist Teil der vierten Wand 118, die zugleich die Tür der Temperierkammer 110 ist. In dieser Wand, der vierten Wand 118, ist eines der Fenster 120, 122 eingearbeitet. Die Tür 118 ist schwenkbar an einer der weiteren Wände 112, 114, 116, 117 befestigt.

Eine optische Achse 190 erstreckt sich senkrecht auf dem Wandabschnitt 140 durch die Probe 128 bzw. den Probenhalter 126 und durch das Fenster 120 bis zu der Kamera 125. Als Ausgangspunkt für die optische Achse 190 kann der Diffusor 152 betrachtet werden, ab dem ein diffuses Licht für die Kamera 125 zur Verfügung steht.

In der Temperierkammer 110 sind die dritte Wand 116 und das Fenster 120 gleichgerichtet. Fenster 120 und dritte Wand 116 erstrecken sich parallel zueinander. Das Fenster 120 ist Teil der dritten Wand 116.

Sowohl der Diffusor 152 als auch die Fenster 120, 122 umfassen ihre eigenen Scheibensätze 144, 144', 144". Die Füllung zwischen den Scheiben der Fenster 120, 122 und den Scheiben des Diffusors 152 können - je nach gewünschter Lichtverteilung - unterschiedlich ausgestaltet sein. Bei dem Diffusor 152 sorgt eine das Licht diffus verteilende Füllung für eine besonders gute, insbesondere gleichmäßig homogene, Verteilung des Lichts.

Die zweite optische Achse 192 geht ebenfalls durch die Temperierkammer 110. In Richtung der zweiten optischen Achse 192 können Augen eines Betrachters während einer Materialprüfung orientiert sein, der durch das Fenster 122 blickend das Verhalten der Probe 128 zwischen den Spannbacken des Probenhalters 126 verfolgen kann. Mit Hilfe des Probenhalters 126 können Kräfte auf die Probe 128 aufgebracht werden.

Ist nur ein minimaler Eingriff in den Materialversuch notwendig, ist nicht mehr die gesamte Temperierkammer 110 anhand der Tür 118 aufzuklappen, sondern eine gesonderte Öffnung im Bereich des Fensters 122, die ausreicht für einen Eingreifen mit z. B. nur einer Hand, muss lediglich geöffnet werden. Die temperierte Luft verbleibt länger in der Temperierkammer 110 als bei vollständig geöffneter Tür 118. Die Temperatur innerhalb der Temperierkammer 110 bleibt also konstanter.

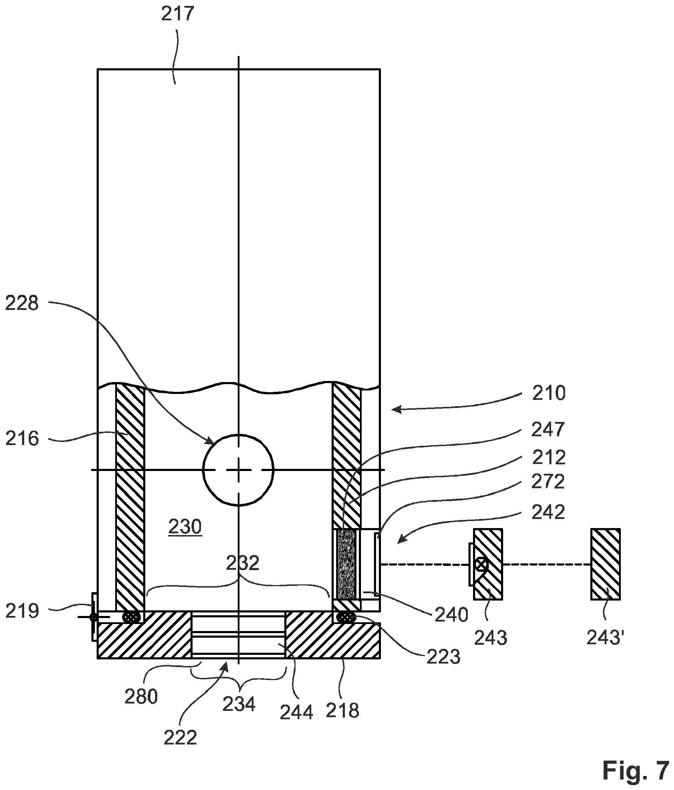

Figur 7 zeigt eine weitere Temperierkammer 210, die ein längliches Format hat. Die Temperierkammer 210 hat eine erste Wand 212. Zudem sind eine dritte Wand 216 und eine weitere Wand 217 zu sehen. Die weitere Wand 217 dient als Deckel oder Dach der Temperierkammer 210. Eine vierte Wand 218 ist mit einem zweiten Verschluss 280 ausgestattet, der in axialer Verlängerung in Bezug auf die Ausrichtung der Probe 228 angeordnet ist. Die Tür 218 ist über ein Scharnier 219 an einer weiteren Wand, genauer an der dritten Wand 216 der Temperierkammer 210 schwenkbar befestigt.

Die Tür 218 schwenkt parallel zur dritten Wand 216, wenn die Tür 218 für einen Zugang zum Inneren 230 der Temperierkammer 210 geöffnet wird. Die Tür 218 versperrt eine erste Öffnung 232. Die Tür 218 hat eine eingelegte Dichtung 223. Z. B. kann ein Dichtgummi an jener Stelle auf der Innenseite der Tür 218 angebracht werden. Im geschlossenen Zustand dichtet die Dichtung 223 die Tür 218 gegenüber den übrigen, sich an die Tür anschließenden Wänden 212, 216, 217 ab.

In der Tür 218 ist ein Scheibensatz 244 angeordnet, der zugleich als Guckfenster 222 und Verschluss 280 genutzt werden kann. Der Scheibensatz 244 ist zugleich Teil des weiteren Verschlusses 280, durch den eine zweite Öffnung 234 zum Inneren der der Temperierkammer 210 verbarrikadiert werden kann.

Anstelle des Wandabschnitts 240 eines Hintergrundbeleuchtungselements 242 können Austauschelemente wie ein Austauschelement 243, 243' in die erste Wand 212 eingesetzt werden. Das Austauschelement 243 ist ein Modul für die Erzeugung einer Basisbeleuchtung. Blickt ein Betrachter durch das Guckfenster 222, so sorgt die Basisbeleuchtung, die von dem Austauschelement 243 zur Verfügung gestellt werden kann, für eine ausreichende Ausleuchtung des Innenraums 230. Soll keine optische Erfassung des Inneren, insbesondere der Probe 228, erfolgen, kann ein Austauschelement 243' an Stelle des Wandabschnitts 240 gesetzt werden. Die Abmessungen des Austauschelements stimmen mit den Abmessungen der weiteren Austauschelemente 243, 243' bzw. des Hintergrundbeleuchtungselements 242 überein. Von außen ist für einen Betrachter zunächst nicht ersichtlich, welches Austauschelement 243, 243' bzw. Hintergrundbeleuchtungselement 242 in der Temperierkammer 210 eingesetzt ist. Liefert eines der Austauschelemente 242, 243, 243' Licht, so dringt dieses Licht nicht an dem Austauschelement 242, 243, 243' nach außen. Ist die zweite Öffnung 234 verschlossen, dringt auch an dieser Stelle kein Licht nach außen. Das Austauschelement 242, 243, 243' ist abgedichtet und lichtdicht Teil der ersten Wand 212. Das Austauschelement 242, 243, 243' verhindert ein Austreten des Lichts aus dem Innenraum 230.

Das Trägermaterial 272 trägt die Licht erzeugenden Bauteile wie z. B. LEDs oder OLEDs. Über einen Spalt, z. B. durch einen Hohlraum geschaffen, beabstandet folgt das Streumittel 247, z. B. ein Aerogel, durch das aus dem punktuell erzeugten Licht ein diffuses Licht gemacht wird.

Dadurch ist eine Temperierkammer 210 geschaffen, die eine Ausleuchtung im Inneren zur Verfügung stellt, wobei das Licht für optische Messungen hinter einem Scheibensatz wie dem Scheibensatz 244 genutzt werden kann.

Dank der Austauschmöglichkeit zwischen dem Hintergrundbeleuchtungselement 242 und seinen Austauschelementen 243, 243' hat ein Temperierkammerbetreiber die Möglichkeit, das Hintergrundbeleuchtungselement 242 nur in den Fällen einzubauen und einzusetzen, in denen er ein bestimmtes optisches Messverfahren anwenden will. Zu den übrigen Zeiten wird das Hintergrundbeleuchtungselement 242 geschont. Dadurch können sogar Hintergrundbeleuchtungselemente 242 eingesetzt werden, die, z. B. aufgrund der Umgebungstemperaturen, einer erhöhten Alterung ausgesetzt oder von Haus aus nur eine kurze Lebensdauer haben.

Figur 8 zeigt einen Ausschnitt einer ersten Wand 312, die Teil einer weiteren Ausführungsform einer Temperierkammer ist, die ähnlich oder identisch zu den Temperierkammern 10 (s. Figur 1), 110 (s. Figur 6) oder 210 (s. Figur 7) ausgeführt sein kann. Der Wandabschnitt 340 der ersten Wand 312 umfasst einen Teil, der ein Hintergrundbeleuchtungselement 342 darstellt. Das Hintergrundbeleuchtungselement 342 umfasst Bereiche, die sich aus mehreren Schichten zusammensetzen. Zu dem Hintergrundbeleuchtungselement 342 gehört ein Scheibensatz 344. Der Scheibensatz 344 umfasst eine erste Scheibe 346, die vorzugsweise eine transparente Scheibe ist. Der Scheibensatz 344 umfasst eine zweite Scheibe 348, die insbesondere eine Milchglasscheibe ist. Zwischen den Scheiben 346, 348 ist ein streuendes Material wie das Aerogel 347 platziert. Das Aerogel 347 wird an seinen übrigen Enden durch Stege 350, 350', die z. B. aus einer Edelstahlfolie gebildet sein können, eingefasst. Zur Abdichtung des Scheibensatzes 344, insbesondere des Aerogels 347 in dem Scheibensatz 344, weist der Scheibensatz 344 Dichtungen 345, 349 auf. Die Dichtung 345 ist eine zu einem Hohlraum 358 gerichtete bzw. an den Hohlraum 358 anschließende Dichtung. Die im Vergleich zur ersten Dichtung 345 kleinere Dichtung 349 liegt in einem zum Innenraum der Temperierkammer hingewendeten Bereich. Die Dichtung 349 hat nur einen geringen isolierenden Schutz vor der Temperatur im Innenraum der Temperierkammer. Die zweite Dichtung 349 ist niedrigeren Temperaturen bzw. niedrigeren Temperaturschwankungen ausgesetzt als die erste Dichtung 349.

Am anderen Ende des Hohlraums 358 sind Leuchtmittel 360, 362, 364, 366 platziert. Die Leuchtmittel 360, 362, 364, 366 sind an der von der Dichtung 345 abgewandten Seite des Hohlraums 358 angeordnet. Die Leuchtmittelabstände 368, 370 zwischen den Leuchtmitteln 360, 362, 364, 366 sind unterschiedlich. Die Leuchtmittel 360, 362, 364, 366 sind auf einem Trägermaterial 372 platziert. Teil des Trägermaterials 372 ist eine Magnetschicht 374, über die das Trägermaterial 372 mit den Leuchtmittel 360, 362, 364, 366 mit einer Gehäuseaußenhülle 378 der Temperierkammer, z. B. eines Typs Temperierkammer wie der zuvor erläuterten Temperierkammer 10, 110, 210, verbunden ist.

Die Magnetschicht 374 sorgt für eine großflächige, flache Anlagerung des Trägermaterials 372 und damit auch der Leuchtmittel 360, 362, 364, 366 an der Gehäuseaußenhülle 378.

Der Hohlraum 358 schützt die Leuchtmittel 360, 362, 364, 366 vor sie schädigenden Temperaturen, die z. B. im Inneren der Temperierkammer herrschen können.

Der Bereich des Hintergrundbeleuchtungselements 342, der mit Isolationsmaterial aufgefüllt ist, wird durch eine Einfassung 351 abgeschlossen. An die Einfassung 351 schließt sich der Scheibensatz 344 an.

Figur 9 zeigt einen Ausschnitt aus einem Hintergrundbeleuchtungselement 442, das ebenfalls schichtartig aufgebaut ist. Sichtversperrende Rahmenteile sind in der Figur 8 ausgeblendet worden. Von Innen nach Außen baut sich das Hintergrundbeleuchtungselement 442 durch eine zweite Scheibe 448, die streuende Funktion übernimmt, ein Streumittel 447 und eine erste Scheibe 446 auf, wobei die erste Scheibe 446 möglichst ungefiltert Licht der Leuchtmittel 460, 462, 464, 466 durchlassen soll. Eine Unterbaugruppe setzt sich aus der ersten Scheibe 446, dem Streumittel 447 und der zweiten Scheibe 448 zusammen. Die drei Bauteile erste Scheibe 446, Streumittel 447 und zweite Scheibe 448 sind durch die Einfassung 451 zu einem Bauteil zusammengefügt. Die Einfassung 451 hält die Scheiben 446, 448 und dichtet das Streumittel 447 gegen Einflüsse von Außen, wie z. B. Feuchtigkeit, ab. Die Leuchtmittel 460, 462, 464, 466 sind beabstandet zu der Baugruppe des Scheibensatzes 444 auf einem Träger 472 angeordnet. Zumindest einige der Leuchtmittel 460, 462, 464, 466 weisen zueinander unterschiedliche Leuchtmittelabstände 468, 470 auf. Durch eine andere Leuchtmittelbeabstandung 468 im Vergleich mit einer Leuchtmittelbeabstandung 470, die zwischen den Leuchtmitteln 462, 464 gegeben ist, ist eine höhere Homogenität bei der Lichtverteilung herzustellen.

Die Leuchtmittel, wie die Leuchtmittel 460, 462, 464, 466, haben elektrische Kontakte, wie Leitungen 476, 476', durch die Strom l₁, l₂ für den Betrieb der Leuchtmittel 460, 462, 464, 466 fließen kann. Die Helligkeit eines Leuchtmittels, genauer eines LED-Bands, wird durch die Stärke des Stroms l₁, l₂ beeinflusst. Soll ein LED-Band heller leuchten als ein anderes LED-Band, kann ein anderer Strom durch das LED-Band geschickt werden.

Beide Maßnahmen, die Einstellung eines unterschiedlichen Stroms l₁, l₂ und unterschiedliche Abstände 468, 470 zwischen den Leuchtmitteln 460, 462, 464, 466, tragen zur Homogenität des Streulichts, des diffusen Lichts bei.

Eine weitere Maßnahme zur Schaffung einer möglichst guten Homogenität ist durch ein Ausrichten der Leuchtmittel 460, 462, 464, 466 gegeben. Die Leuchtmittel 460, 462, 464, 466 in der Gestaltung nach Figur 9 strahlen unmittelbar auf die Scheiben 446, 448. Die Vorzugsrichtung des Abstrahlens ist auf den Scheibensatz 444 orientiert.

Der Hohlraum 458 zwischen den Leuchtmitteln 460, 462, 464, 466 und der ersten Scheibe 446 des Scheibensatzes 444 übernimmt mehrere Aufgaben. Dem Licht aus den punktuellen Lichtquellen der Leuchtmittel 460, 462, 464, 466, die als LED-Bänder realisiert sind, und der gewünschten diffusen Streuung auf der Innenseite einer Temperierkammer muss eine ausreichende optische Strecke zur Verfügung gestellt werden, damit aus dem punktuellen Licht der LED-Bänder 460, 462, 464, 466 ein diffuses Licht, u. a. unter Nutzung des Scheibensatzes 444, werden kann. Der Hohlraum 458 sorgt für ein ausreichendes Abfallen im Verlauf des Temperaturprofils, sodass die Leuchtmittel 460, 462, 464, 466 keine Schädigungen trotz hoher Temperaturen im Inneren einer Temperierkammer (vgl. Figuren 5, 6, 7) erfahren. Die Verlustwärme von den Leuchtmitteln 460, 462, 464, 466 wird über das Trägermaterial 472 nach Außen abgegeben. Der Hohlraum 458 wirkt als thermischer Widerstand von den Leuchtmitteln 460, 462, 464, 466 zum Inneren der das Hintergrundbeleuchtungselement aufnehmenden Temperierkammer genauso wie vom Inneren der Temperierkammer auf die Leuchtmittel 460, 462, 464, 466.

Die in den einzelnen Figuren gezeigten Ausgestaltungsmöglichkeiten lassen sich auch untereinander in beliebiger Form verbinden.

### Bezugszeichenliste

- 1, 100: Materialprüfmaschine, insbesondere Säulenmaterialprüfmaschine
- 3, 103: erste Säule
- 5, 105: zweite Säule
- 7: Lüfter
- 8: Klimagerät, z. B. Befeuchtungs- und/oder Heizgerät
- 9: Temperierungskanal
- 10, 110, 210: Temperierkammer
- 12, 112, 212,: erste Wand
- 312 14, 114: zweite Wand
- 16, 116,216: dritte Wand
- 17, 117, 217: Wand, insbesondere weitere Wand der Temperierkammer wie ein Deckel
- 18, 118, 218: vierte Wand, insbesondere Tür der Temperierkammer
- 19, 219: Scharnier, insbesondere senkrecht verlaufendes Schwenkscharnier
- 20, 120: Fenster, insbesondere erstes Fenster
- 21: Türgriff
- 22, 122, 222: Fenster, insbesondere Guckfenster in der Tür
- 23, 223: Dichtung, insbesondere eingelegte Türdichtung
- 24: Kamera
- 25, 125: Kamera, insbesondere für Hell-Dunkel-Abtastungen, z. B. als zweite Kamera
- 26, 126: Probenhalter
- 28, 28', 128,: Probe
- 228 30, 130, 230: Innere, insbesondere Innenraum oder Arbeitsraum
- 32, 232: erste Öffnung
- 34, 234: zweite Öffnung
- 40, 140, 240,: Wandabschnitt
- 340 242, 342, 442: Hintergrundbeleuchtungselement
- 243: Austauschelement, insbesondere zur Erzeugung einer Basisbeleuchtung
- 243': Austauschelement, insbesondere ohne jegliche Beleuchtung
- 144, 144', 144",: Scheibensatz
- 244, 344, 444 345: Dichtung, insbesondere erste Scheibensatzdichtung
- 346, 446: erste Scheibe, insbesondere transparente Scheibe
- 247, 347, 447: Streumittel, insbesondere ein Aerogel
- 348, 448: zweite Scheibe, insbesondere streuende Scheibe
- 349: Dichtung, insbesondere zweite Scheibensatzdichtung
- 350, 350': Steg, z. B. Edelstahlfolie
- 351, 451: Einfassung, insbesondere Isolationsmaterialeinfassung
- 52, 152: Diffusor
- 358, 458: Hohlraum
- 59: Leuchtmodul
- 360, 460: erstes Leuchtmittel, insbesondere LED oder LED-Band
- 362, 462: zweites Leuchtmittel, insbesondere LED oder LED-Band
- 364, 464: drittes Leuchtmittel, insbesondere LED oder LED-Band
- 366, 466: viertes Leuchtmittel, insbesondere LED oder LED-Band
- 368, 468: erster Leuchtmittelabstand
- 370, 470: zweiter Leuchtmittelabstand
- 272, 372, 472: Trägermaterial, insbesondere mit integrierten Leiterbahnen
- 374: Magnetschicht bzw. magnetisierbare Schicht
- 476,476': Leitung
- 78, 378: Gehäuseaußenhülle
- 80, 280: zweiter Verschluss
- 81: Scharnier, insbesondere des zweiten Verschlusses
- 82: Griff, insbesondere des zweiten Verschlusses
- 83: Isolierblock, insbesondere auf dem zweiten Verschluss
- 84: Rahmen des zweiten Verschlusses
- 85: Lamellenvorhang
- 86: Verschlussinnenseite
- 87: Dichtung, insbesondere erste Dichtung des zweiten Verschlusses
- 88: Dichtung, insbesondere zweite Dichtung des zweiten Verschlusses
- 89: Rahmen
- 90, 190: erste optische Achse
- 92, 192: zweite optische Achse
- 94: Symmetrieachse, insbesondere der Temperierkammer
- I₁, I₂: Strom, insbesondere elektrischer Strom
- A-A: Schnittlinie A-A
- B-B: Schnittlinie B-B

## Patentansprüche

1. Temperierkammer (10, 110, 210)
mit einer Wand (12, 118, 212, 312),
bei der ein Wandabschnitt (40, 140, 240, 340) mit Leuchtmitteln (59, 242, 342, 360, 362, 364, 366, 442, 460, 462, 464, 466) ausgestattet ist,
die durch mindestens eine lichtdurchlässige Schicht des Wandabschnitts (40, 140, 240, 340) von einem Inneren (30, 130, 230) der Temperierkammer (10, 110, 210) getrennt sind und
die Bestandteile des Wandabschnitts (40, 140, 240, 340) sind,
wobei die Temperierkammer (10, 110, 210) zur optischen Messerfassung, z. B. zu einer berührungslosen Extensometermessung, einer Material- oder Bauteil-Probe (28, 28', 128, 228),
die im Inneren (30, 130, 230) der Temperierkammer (10, 110, 210) anordnenbar ist, durch ein Kamerasystem auf Basis eines Messverfahrens mit Hintergrundbeleuchtung (242, 342, 442) geeignet ist,
indem der Wandabschnitt (40, 140, 240, 340) eine Hintergrundbeleuchtung (242, 342, 442) mit diffusem Licht erzeugt,
das von einer Kamera (24, 25, 125) des Kamerasystems aufgenommen werden kann, wobei die Temperierkammer (10, 110, 210) ein, bezogen auf den Wandabschnitt (40, 140, 240, 340), andernorts angesiedeltes Fenster (20, 22, 120, 122, 222) hat, durch das Licht aus der Temperierkammer (10, 110, 210) austretend zu der Kamera (24, 25, 125) oder zu einer zweiten Kamera (25) gelangen kann,
wobei insbesondere die Temperierkammer (10, 110, 210) Teil einer Belastungseinrichtung,
z. B. einer Materialprüfmaschine (1, 100) wie einer Säulenmaterialprüfmaschine (1, 100),
ist.

2. Temperierkammer (10, 110, 210) nach Anspruch 1,
wobei die Temperierkammer (10, 110, 210) eine mehrlagige, isolierte Kammer (10, 110, 210) mit einem in ihrem Inneren (30, 130, 230) vorhandenen Prüfraum und Öffnungen zum Durchführen von Befestigungselementen von Spannmitteln ist.

3. Temperierkammer (10, 110, 210) nach einem der vorhergehenden Ansprüche,
wobei die Leuchtmittel LEDs (360, 362, 364, 366, 460, 462, 464, 466), insbesondere LED-Bänder (460, 462, 464, 466), sind, die auf einem Träger (472), z. B. auf einem Aluminiumblech, im Inneren des Wandabschnitts (40, 140, 240, 340) befestigt sind und deren Licht vorzugsweise von einem Diffusor (52, 152, 247, 344, 346, 347, 348, 444, 447), z. B. ein Aerogel (247, 347), eine Milchglasscheibe (348) und/oder eine Satinatglasscheibe umfassend, verteilt wird.

4. Temperierkammer (10, 110, 210) nach Anspruch 3,
wobei als Diffusor (52, 152, 247, 344, 346, 347, 348, 444, 447) ein Schichtaufbau dient, der eine erste, vorzugsweise transparente, Glasscheibe (346, 446), eine zweite, vorzugsweise streuende, Glasscheibe (348, 448), wie eine Milchglasscheibe (348) oder eine Satinatglasscheibe, umfasst, zwischen denen ein weiterer Diffusor (347, 447), z. B. in der Form als Aerogel (347), angeordnet ist,
wobei der Schichtaufbau insbesondere einen integrierten Teil der Wand (12, 118, 212, 312) bildet.

5. Temperierkammer (10, 110, 210) nach einem der vorhergehenden Ansprüche, wobei die Leuchtmittel (59, 242, 360, 362, 364, 366, 460, 462, 464, 466) durch einen Luftspalt (358, 458) von einer Isolierschicht, insbesondere gebildet durch den Schichtaufbau, beabstandet in eine Vorzugsrichtung abstrahlen.

6. Temperierkammer (10, 110, 210) nach einem der vorhergehenden Ansprüche, wobei ein Trägerblech (372, 374) für die Leuchtmittel (360, 362, 364, 366) durch magnetische Kräfte gehalten, flächig an einer äußeren Schicht (378) des Wandabschnitts (340) angeordnet ist.

7. Temperierkammer (10, 110, 210) nach einem der vorhergehenden Ansprüche, wobei die Leuchtmittel (360, 362, 364, 366, 460, 462, 464, 466) zueinander mit verschiedenen seitlichen Abständen (368, 370, 468, 470) angeordnet innerhalb des Wandabschnitts (340) verteilt sind, wodurch insbesondere eine Lichtverteilung homogenisiert ist.

8. Temperierkammer (10, 110, 210) nach einem der vorhergehenden Ansprüche, wobei der Wandabschnitt (240) als eigenständiges, flaches, insbesondere erstes, Modul (242, 243, 243') eine Öffnung in der Temperierkammer (210) verschließend durch ein weiteres wie zweites Modul (243, 243', 242) austauschbar ist, wobei das zweite Modul (243) insbesondere mit Leuchtmitteln ausgestattet zur Erzeugung von Licht für eine Basissichtbeleuchtung innerhalb der Temperierkammer (10, 110, 210) gestaltet ist.

9. Temperierkammer (10, 110, 210) nach einem der vorhergehenden Ansprüche,
wobei der Wandabschnitt (40, 140, 240, 340), das Fenster (20, 22, 120, 122, 222) und die anzuordnende Material- oder Bauteil-Probe (28, 128, 228) - im Wesentlichen - auf einer optischen Achse (90, 190) liegen,
die zumindest entweder unter einem von einem rechten Winkel in Bezug auf die Wand (12, 118, 212, 312) der Temperierkammer (10, 110, 210) mit Leuchtmitteln (59, 242, 342, 360, 362, 364, 366, 442, 460, 462, 464, 466) abweichenden Winkel oder unter einem von einem rechten Winkel in Bezug auf eine durch eine Tür (18, 118, 218) aufgespannte Ebene der Temperierkammer (10, 110, 210) abweichenden Winkel verläuft.

10. Temperierkammer (10, 110, 210) nach Anspruch 9,
wobei eine Oberfläche des Fensters (20, 22, 120, 122, 222) quer wie rechtwinklig zur optischen Achse (90, 92, 190, 192) angeordnet ist.

11. Temperierkammer (10, 110, 210) nach einem der vorhergehenden Ansprüche, wobei der Wandabschnitt (40, 140, 240, 340) Teil einer der, insbesondere größten, Seitenflächen (12, 212, 312) der Temperierkammer (10, 110, 210) ist, wobei insbesondere der Wandabschnitt (40, 240) ein an eine Tür (18, 218) anschließender Wandabschnitt (40, 240) und/oder ein parallel zu einer Prüfachse verlaufender Wandabschnitt (40, 140, 240) ist.

12. Temperierkammer (10, 110, 210) nach einem der vorhergehenden Ansprüche,
wobei die Temperierkammer (10, 110, 210) eine erste Öffnung (32, 232) als Zugang zu einem Inneren (30, 130, 230) der Temperierkammer (10, 110, 210),
ein Fenster (20, 22, 120, 122, 222) und
einen türartigen, insbesondere ersten, Verschluss (18, 80, 118, 218, 280), durch den die erste Öffnung (32, 232) verschließbar ist, aufweist,
wobei der Verschluss (18, 118, 218) der ersten Öffnung (32, 232) einen äußeren Rahmen (84, 89),
eine von dem Rahmen (84, 89) flankierte zweite Öffnung (34, 234), die einen Teil der ersten Öffnung (32, 232) trotz eines Verschließens durch den Verschluss (18, 118, 218) freigeben kann,
und das Fenster (22, 122, 222), das innerhalb des Rahmens (89) in einem fixierten Bezug zum Rahmen (89) einen Teil des Verschlusses (18, 118, 218) darstellt, aufweist, wobei zumindest eine der Öffnungen (32, 34, 232, 234), vorzugsweise zumindest die zweite Öffnung (34, 234), durch einen Lamellenvorhang (85), wie durch einen Silikonlamellenvorhang, verhängbar ist, dessen Lamellen zur Seite schiebbar sind.

13. Verfahren zur Erzeugung einer Hintergrundbeleuchtung (242, 342, 442)
in einer Temperierkammer (10, 110, 210) nach einem der vorhergehenden Ansprüche durch die Leuchtmittel (59, 242, 342, 360, 362, 364, 366, 442, 460, 462, 464, 466), wobei die Hintergrundbeleuchtung (242, 342, 442) für ein Messverfahren, vorzugsweise für ein berührungsloses, optisches Messverfahren bei einer Materialprüfung wie einer Dimensionsänderungsmessung mit einem Kamerasystem, erzeugt wird,
wobei die Leuchtmittel (59, 360, 362, 364, 366, 460, 462, 464, 466) hinter wenigstens der lichtdurchlässigen Schicht (52, 144, 152, 247, 344, 346, 347, 348, 358, 444, 446, 447, 448, 458) betrieben werden,
die Teil des Wandabschnitts (40, 140, 240, 340) der Temperierkammer (10, 110, 210) ist,
damit die Leuchtmittel (59, 360, 362, 364, 366, 460, 462, 464, 466) als Komponenten des Wandabschnitts (40, 140, 240, 340) in diesem Licht aussenden,
wobei der Wandabschnitt (40, 140, 240, 340), insbesondere unter Zuhilfenahme der Schicht (52, 144, 152, 247, 344, 346, 347, 348, 358, 444, 446, 447, 448, 458), das Licht der Leuchtmittel (59, 360, 362, 364, 366, 460, 462, 464, 466) zu einem diffusen Licht streut.

14. Verfahren nach Anspruch 13,
wobei ein erstes Leuchtmittel (360, 366, 460) mit einem anderen Betriebsstrom (l₁, l₂) betrieben wird als ein zweites Leuchtmittel (362, 364, 462, 464, 466), wobei vorzugsweise das erste Leuchtmittel (360, 366, 460) und das zweite Leuchtmittel (362, 364, 462) nebeneinander angeordnet sind, von denen das Leuchtmittel (360, 366, 460), das mit einem höheren Betriebsstrom (l₂) betrieben wird, näher an einem Rand des Wandabschnitts (140, 240, 340) angeordnet ist als das Leuchtmittel (362, 364, 462, 464, 466), das mit einem niedrigeren Betriebsstrom (l₁) betrieben wird.

15. Verfahren nach Anspruch 13 oder Anspruch 14,
wobei die Leuchtmittel (460, 462, 464, 466) in Gestalt von mehreren in einer vertikalen Richtung parallel liegenden LED-Bändern angeordnet sind,
wobei ein Abstand zwischen den LED-Bändern zueinander variiert und
die LED-Bänder auf einem dünnen und flexiblen Trägerblech aufgeklebt sind,
um durch eine Variation des Abstandes der vertikal angeordneten LED-Bänder zueinander eine Homogenität einer Leuchtstärke auf einer vom Licht durchdrungenen Fläche in horizontaler Richtung zu verbessern.

## Claims

1. Temperature control chamber (10, 110, 210)
having a wall (12, 118, 212, 312),
in which a wall portion (40, 140, 240, 340) is equipped with illumination means (59, 242, 342, 360, 362, 364, 366, 442, 460, 462, 464, 466),
which are separated from an interior (30, 130, 230) of the temperature control chamber (10, 110, 210) by at least one translucent layer of the wall portion (40, 140, 240, 340) and
which are constituent parts of the wall portion (40, 140, 240, 340),
wherein the temperature control chamber (10, 110, 210) is suitable for optically measuring, for example for measuring in a contactless manner by means of an extensometer, a material sample or component sample (28, 28', 128, 228),
which can be arranged in the interior (30, 130, 230) of the temperature control chamber (10, 110, 210),
by way of a camera system based on a measurement method using background illumination (242, 342, 442),
in that the wall portion (40, 140, 240, 340) generates a background illumination (242, 342, 442) with diffuse light,
which can be captured by a camera (24, 25, 125) of the camera system,
wherein the temperature control chamber (10, 110, 210) has a window (20, 22, 120, 122, 222), which is located elsewhere in relation to the wall portion (40, 140, 240, 340) and through which light exiting from the temperature control chamber (10, 110, 210) can reach the camera (24, 25, 125) or a second camera (25),
wherein in particular the temperature control chamber (10, 110, 210) is part of a load device,
for example of a material testing machine (1, 100) such as a column material testing machine (1, 100).

2. Temperature control chamber (10, 110, 210) according to claim 1,
wherein the temperature control chamber (10, 110, 210) is a multi-layered, insulated chamber (10, 110, 210) having a test space in the interior (30, 130, 230) thereof and openings for the passage of fastening elements of clamping means.

3. Temperature control chamber (10, 110, 210) according to any one of the preceding claims,
wherein the illumination means are LEDs (360, 362, 364, 366, 460, 462, 464, 466), in particular LED strips (460, 462, 464, 466), which are attached to a carrier (472), for example an aluminium sheet, in the interior of the wall portion (40, 140, 240, 340) and the light from which is preferably distributed by a diffuser (52, 152, 247, 344, 346, 347, 348, 444, 447), for example comprising an aerogel (247, 347), a frosted glass pane (348) and/or a satin glass pane.

4. Temperature control chamber (10, 110, 210) according to claim 3,
wherein, as the diffuser (52, 152, 247, 344, 346, 347, 348, 444, 447), use is made of a layer structure comprising a first, preferably transparent, glass pane (346, 446) and a second, preferably scattering, glass pane (348, 448), such as a frosted glass pane (348) or a satin glass pane, between which a further diffuser (347, 447) is arranged, for example in the form of an aerogel (347),
wherein the layer structure in particular forms an integrated part of the wall (12, 118, 212, 312).

5. Temperature control chamber (10, 110, 210) according to any one of the preceding claims,
wherein the illumination means (59, 242, 360, 362, 364, 366, 460, 462, 464, 466) emit through an air gap (358, 458) from an insulating layer, in particular formed by the layer structure, spaced apart in a preferred direction.

6. Temperature control chamber (10, 110, 210) according to any one of the preceding claims,
wherein a carrier plate (372, 374) for the illumination means (360, 362, 364, 366) is arranged flat on an outer layer (378) of the wall portion (340) in a manner held by magnetic forces.

7. Temperature control chamber (10, 110, 210) according to any one of the preceding claims,
wherein the illumination means (360, 362, 364, 366, 460, 462, 464, 466) are distributed within the wall portion (340) in a manner arranged at different lateral distances (368, 370, 468, 470) from one another, as a result of which in particular a light distribution is homogenized.

8. Temperature control chamber (10, 110, 210) according to any one of the preceding claims,
wherein the wall portion (240), as a self-contained, flat, in particular first, module (242, 243, 243') closing an opening in the temperature control chamber (210), can be replaced by a further, for instance second module (243, 243', 242), the second module (243), in particular equipped with illumination means, being designed to generate light for a basic visual illumination within the temperature control chamber (10, 110, 210).

9. Temperature control chamber (10, 110, 210) according to any one of the preceding claims,
wherein the wall portion (40, 140, 240, 340), the window (20, 22, 120, 122, 222) and the material sample or component sample (28, 128, 228) to be arranged lie - substantially - on an optical axis (90, 190),
which extends at least either at an angle other than a right angle in relation to the wall (12, 118, 212, 312) of the temperature control chamber (10, 110, 210) that has illumination means (59, 242, 342, 360, 362, 364, 366, 442, 460, 462, 464, 466) or at an angle other than a right angle in relation to a plane of the temperature control chamber (10, 110, 210) that is spanned by a door (18, 118, 218).

10. Temperature control chamber (10, 110, 210) according to claim 9,
wherein a surface of the window (20, 22, 120, 122, 222) is arranged transversely, for instance at a right angle, to the optical axis (90, 92, 190, 192).

11. Temperature control chamber (10, 110, 210) according to any one of the preceding claims,
wherein the wall portion (40, 140, 240, 340) is part of one of the, in particular largest, side faces (12, 212, 312) of the temperature control chamber (10, 110, 210), the wall portion (40, 240) being in particular a wall portion (40, 240) adjoining a door (18, 218) and/or a wall portion (40, 140, 240) extending parallel to a test axis.

12. Temperature control chamber (10, 110, 210) according to any one of the preceding claims,
wherein the temperature control chamber (10, 110, 210) has a first opening (32, 232) as access to an interior (30, 130, 230) of the temperature control chamber (10, 110, 210), a window (20, 22, 120, 122, 222), and
a door-like, in particular first, closure (18, 80, 118, 218, 280), by which the first opening (32, 232) can be closed,
wherein the closure (18, 118, 218) of the first opening (32, 232) has an outer frame (84, 89),
a second opening (34, 234), which is flanked by the frame (84, 89) and which can expose part of the first opening (32, 232) despite this being closed by the closure (18, 118, 218),
and the window (22, 122, 222), which represents part of the closure (18, 118, 218) within the frame (89) in a fixed relationship to the frame (89),
wherein at least one of the openings (32, 34, 232, 234), preferably at least the second opening (34, 234), can be covered by a strip curtain (85), for instance by a silicone strip curtain, the strips of which can be pushed to the side.

13. Method for generating a background illumination (242, 342, 442) in a temperature control chamber (10, 110, 210) according to any one of the preceding claims
by way of the illumination means (59, 242, 342, 360, 362, 364, 366, 442, 460, 462, 464, 466),
wherein the background illumination (242, 342, 442) is generated for a measurement method, preferably for a contactless, optical measurement method in materials testing, for instance in measuring a change in dimensions using a camera system,
wherein the illumination means (59, 360, 362, 364, 366, 460, 462, 464, 466) are operated behind at least the translucent layer (52, 144, 152, 247, 344, 346, 347, 348, 358, 444, 446, 447, 448, 458),
which is part of the wall portion (40, 140, 240, 340) of the temperature control chamber (10, 110, 210),
so that the illumination means (59, 360, 362, 364, 366, 460, 462, 464, 466) as components of the wall portion (40, 140, 240, 340) emit light within the latter,
wherein the wall portion (40, 140, 240, 340) scatters the light from the illumination means (59, 360, 362, 364, 366, 460, 462, 464, 466), in particular with the aid of the layer (52, 144, 152, 247, 344, 346, 347, 348, 358, 444, 446, 447, 448, 458), in order to create a diffuse light.

14. Method according to claim 13,
wherein a first illumination means (360, 366, 460) is operated with a different operating current (I₁, I₂) than a second illumination means (362, 364, 462, 464, 466), the first illumination means (360, 366, 460) and the second illumination means (362, 364, 462) preferably being arranged next to one another, the illumination means (360, 366, 460) operated with a higher operating current (I₂) being arranged closer to an edge of the wall portion (140, 240, 340) than the illumination means (362, 364, 462, 464, 466) operated with a lower operating current (I₁).

15. Method according to claim 13 or claim 14,
wherein the illumination means (460, 462, 464, 466) are arranged in the form of a plurality of LED strips oriented parallel in a vertical direction,
wherein a distance between the LED strips varies and
the LED strips are adhesively bonded to a thin and flexible carrier plate,
in order to improve, by a variation of the distance between the vertically arranged LED strips, a homogeneity of an illumination intensity in a horizontal direction on a light-penetrated surface.

## Revendications

1. Enceinte thermique (10, 110, 210)
avec une paroi (12, 118, 212, 312)
pour laquelle une portion de paroi (40, 140, 240, 340) est équipée de sources lumineuses (59, 242, 342, 360, 362, 364, 366, 442, 460, 462, 464, 466) qui sont séparées par au moins une couche perméable à la lumière de la portion de paroi (40, 140, 240, 340) d'un intérieur (30, 130, 230) de l'enceinte thermique (10, 110, 210) et
qui sont des parties intégrantes de la portion de paroi (40, 140, 240, 340), cependant que l'enceinte thermique (10, 110, 210) est appropriée pour la détection de mesure optique, par exemple pour une mesure sans contact par extensomètre, d'une éprouvette de matériau ou de composant (28, 28', 128, 228)
qui peut être placée dans l'intérieur (30, 130, 230) de l'enceinte thermique (10, 110, 210), par un système de caméra sur la base d'un procédé de mesure avec un rétroéclairage (242, 342, 442),
la portion de paroi (40, 140, 240, 340) produisant un rétroéclairage (242, 342, 442) avec une lumière diffuse qui peut être captée par une caméra (24, 25, 125) du système de caméra,
l'enceinte thermique (10, 110, 210) ayant une fenêtre (20, 22, 120, 122, 222), située à un autre endroit par rapport à la portion de paroi (40, 140, 240, 340), par laquelle de la lumière qui sort de l'enceinte thermique (10, 110, 210) peut arriver à la caméra (24, 25, 125) ou à une seconde caméra (25),
cependant qu'en particulier l'enceinte thermique (10, 110, 210) est une partie d'un dispositif de chargement, par exemple d'une machine d'essais des matériaux (1, 100) comme une machine d'essais de matériau de colonne (1, 100).

2. Enceinte thermique (10, 110, 210) selon la revendication 1, cependant que l'enceinte thermique (10, 110, 210) est une enceinte isolée à plusieurs couches (10, 110, 210) avec un espace d'essai existant dans l'intérieur (30, 130, 230) et des ouvertures pour le passage d'éléments de fixation de moyens de serrage.

3. Enceinte thermique (10, 110, 210) selon l'une des revendications précédentes, les sources lumineuses étant des LED (360, 362, 364, 366, 460, 462, 464, 466), en particulier des bandes lumineuses LED (460, 462, 464, 466) qui sont fixées sur un support (472), par exemple sur une tôle d'aluminium, dans l'intérieur de la portion de paroi (40, 140, 240, 340) et dont la lumière est distribuée de préférence par un diffuseur (52, 152, 247, 344, 346, 347, 348, 444, 447), qui comprend par exemple un aérogel (247, 347), une vitre en verre dépoli (348) et/ou une vitre en verre satiné.

4. Enceinte thermique (10, 110, 210) selon la revendication 3, cependant qu'une structure en couches sert de diffuseur (52, 152, 247, 344, 346, 347, 348, 444, 447), structure qui comprend une première vitre en verre, de préférence transparente, (346, 446), une seconde vitre en verre, de préférence qui disperse, (348, 448), comme une vitre en verre dépoli (348) ou une vitre en verre satiné, entre lesquelles un autre diffuseur (347, 447), par exemple sous forme d'aérogel (347), est placé, la structures en couches formant en particulier une partie intégrée de la paroi (12, 118, 212, 312).

5. Enceinte thermique (10, 110, 210) selon l'une des revendications précédentes, les sources lumineuses (59, 242, 342, 360, 362, 364, 366, 442, 460, 462, 464, 466), espacées par une fente d'air (358, 458) d'une couche d'isolation, en particulier formée par la structure en couches, émettant dans une direction préférentielle.

6. Enceinte thermique (10, 110, 210) selon l'une des revendications précédentes, une tôle de support (372, 374) pour les sources lumineuses (360, 362, 364, 366), maintenue par des forces magnétiques, étant placée à surface plane sur une couche extérieure (378) de la portion de paroi (340).

7. Enceinte thermique (10, 110, 210) selon l'une des revendications précédentes, les sources lumineuse (360, 362, 364, 366, 460, 462, 464, 466) étant réparties à l'intérieur de la portion de paroi (340) en étant placées l'une par rapport à l'autre avec différentes distances latérales (368, 370, 468, 470) si bien qu'en particulier une distribution de la lumière est homogénéisée.

8. Enceinte thermique (10, 110, 210) selon l'une des revendications précédentes, la portion de paroi (240), en tant que module indépendant plat, en particulier en tant que premier module (242, 243, 243'), en fermant une ouverture dans l'enceinte thermique (210), pouvant être remplacée par un autre module, comme un second module (243, 243', 242), le second module (243) étant agencé en particulier en étant équipé de sources lumineuses pour produire de la lumière pour un éclairage de vue de base à l'intérieur de l'enceinte thermique (10, 110, 210).

9. Enceinte thermique (10, 110, 210) selon l'une des revendications précédentes, la portion de paroi (40, 140, 240, 340), la fenêtre (20, 22, 120, 122, 222) et l'éprouvette de matériau ou de composant (28, 28', 128, 228) à placer étant situées - sensiblement - sur un axe optique (90, 190) qui s'étend au moins soit en formant un angle qui diffère d'un angle droit par rapport à la paroi (12, 118, 212, 312) de l'enceinte thermique (10, 110, 210) avec des sources lumineuses (59, 242, 342, 360, 362, 364, 366, 442, 460, 462, 464, 466), soit en formant un angle qui diffère d'un angle droit par rapport à un plan de l'enceinte thermique (10, 110, 210) qui passe par une porte (18, 118, 218).

10. Enceinte thermique (10, 110, 210) selon la revendication 9, une surface de la fenêtre (20, 22, 120, 122, 222) étant placée transversalement comme à angle droit de l'axe optique (90, 92, 190, 192).

11. Enceinte thermique (10, 110, 210) selon l'une des revendications précédentes, la portion de paroi (40, 140, 240, 340) étant une partie d'une des surfaces latérales, en particulier des plus grandes surfaces latérales (12, 212, 312) de l'enceinte thermique (10, 110, 210), cependant qu'en particulier la portion de paroi (40, 240) est une portion de paroi (40, 240) qui se rattache à une porte (18, 218) et/ou une portion de paroi (40, 140, 240) qui est parallèle à un axe d'essai.

12. Enceinte thermique (10, 110, 210) selon l'une des revendications précédentes, l'enceinte thermique (10, 110, 210) présentant une première ouverture (32, 232) comme accès à un intérieur (30, 130, 230) de l'enceinte thermique (10, 110, 210), une fenêtre (20, 22, 120, 122, 222) et une fermeture de type porte, en particulier une première fermeture de type porte (18, 80, 118, 218, 280), par laquelle la première ouverture (20, 22, 120, 222) peut être fermée, la fermeture (18, 118, 218) de la première ouverture (32, 232) présentant un cadre extérieur (84, 89), une seconde ouverture (34, 234) encadrée par le cadre (84, 89), qui peut dégager une partie de la première ouverture (32, 232) malgré une fermeture par la fermeture (18, 118, 218), et la fenêtre (22, 122, 222) qui constitue une partie de la fermeture (18, 118, 218) à l'intérieur du cadre (89) dans un rapport fixé par rapport au cadre (89), cependant qu'un rideau à lamelles (85) comme un rideau à lamelles en silicone, peut être tendu sur au moins l'une des ouvertures (32, 34, 232, 234), de préférence au moins la seconde ouverture (34, 234), rideau dont les lamelles peuvent être poussées sur le côté.

13. Procédé pour la production d'un rétroéclairage (242, 342, 442) dans une enceinte thermique (10, 110, 210) selon l'une des revendications précédentes par les sources lumineuses (59, 242, 342, 360, 362, 364, 366, 442, 460, 462, 464, 466), le rétroéclairage (242, 342, 442) étant produit pour un procédé de mesure, de préférence un procédé de mesure optique sans contact pour un essai de matériaux comme une mesure de changement dimensionnel avec un système de caméra, les sources lumineuses (59, 242, 342, 360, 362, 364, 366, 442, 460, 462, 464, 466) fonctionnant derrière au moins la couche perméable à la lumière (52, 144, 152, 247, 344, 346, 347, 348, 358, 444, 446, 447, 448, 458) qui est une partie de la portion de paroi (40, 140, 240, 340) de l'enceinte thermique (10, 110, 210) pour que les sources lumineuses (59, 242, 342, 360, 362, 364, 366, 442, 460, 462, 464, 466) en tant que composants de la portion de paroi (40, 140, 240, 340) émettent de la lumière dans celle-ci, la portion de paroi (40, 140, 240, 340) dispersant la lumière des sources lumineuses (59, 242, 342, 360, 362, 364, 366, 442, 460, 462, 464, 466) en une lumière diffuse, en particulier en ayant recours à la couche (52, 144, 152, 247, 344, 346, 347, 348, 358, 444, 446, 447, 448, 458).

14. Procédé selon la revendication 13, cependant qu'une première source lumineuse (360, 366, 460) fonctionne avec un autre courant de fonctionnement (l₁, l₂) qu'une seconde source d'éclairage (362, 364, 462, 464, 466), de préférence la première source lumineuse (360, 366, 460) et la seconde source lumineuse (362, 364, 462, 464, 466) étant placées l'une à côté de l'autre, la source lumineuse (360, 366, 460) d'entre elles qui fonctionne avec un courant de fonctionnement plus élevé (l₂) étant placée plus près d'un bord de la portion de paroi (140, 240, 340) que la source lumineuse (362, 364, 462, 464, 466) qui fonctionne avec un courant de fonctionnement plus bas (l₁).

15. Procédé selon la revendication 13 ou la revendication 14, les sources lumineuses (460, 462, 464, 466) étant placées sous forme de plusieurs bandes lumineuses LED situées parallèlement dans une direction verticale, une distance entre les bandes lumineuses LED l'une par rapport à l'autre variant et les bandes lumineuses LED étant collées sur une tôle de support mince et flexible pour améliorer, par une variation de la distance des bandes lumineuses LED, placées verticalement, l'une par rapport à l'autre l'homogénéité d'une intensité lumineuse dans la direction horizontale sur une surface traversée par la lumière.
